(19) Europäisches Patentamt / European Patent Office / Office européen des brevets

(11) **EP 4 287 298 A1**

(12) **EUROPEAN PATENT APPLICATION**
published in accordance with Art. 153(4) EPC

(43) Date of publication:
06.12.2023 Bulletin 2023/49

(21) Application number: 22745988.0

(22) Date of filing: 27.01.2022

(51) International Patent Classification (IPC):
$H01M\ 4/13^{(2010.01)}$    $H01M\ 4/62^{(2006.01)}$
$H01M\ 10/052^{(2010.01)}$    $H01M\ 50/409^{(2021.01)}$

(52) Cooperative Patent Classification (CPC):
H01M 4/13; H01M 4/62; H01M 10/052;
H01M 50/409; Y02E 60/10

(86) International application number:
PCT/JP2022/003144

(87) International publication number:
WO 2022/163769 (04.08.2022 Gazette 2022/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.01.2021 JP 2021013980

(71) Applicant: Zeon Corporation
Tokyo 100-8246 (JP)

(72) Inventor: ASAI, Kazuki
Tokyo 100-8246 (JP)

(74) Representative: Maiwald GmbH
Elisenhof
Elisenstraße 3
80335 München (DE)

(54) **NONAQUEOUS SECONDARY BATTERY**

(57) A non-aqueous secondary battery includes a positive electrode, a negative electrode, an electrolyte solution, and a separator. The positive electrode includes a current collector and a positive electrode mixed material layer formed on the current collector. The positive electrode mixed material layer contains a positive electrode active material, a conductive material, and a polymer A. The polymer A includes a nitrile group-containing monomer unit and either or both of a conjugated diene monomer unit and an alkylene structural unit. The content of the polymer A in the positive electrode mixed material layer is not less than 0.01 mass% and not more than 8 mass%. The separator includes a separator substrate and a porous membrane formed on the separator substrate. The porous membrane contains non-conductive particles and a polymer B.

EP 4 287 298 A1

**Description**

TECHNICAL FIELD

The present disclosure relates to a non-aqueous secondary battery.

BACKGROUND

Non-aqueous secondary batteries such as lithium ion secondary batteries have characteristics such as compact size, light weight, high energy-density, and the ability to be repeatedly charged and discharged, and are used in a wide range of applications. A secondary battery generally includes battery members such as electrodes (positive electrode and negative electrode) and a separator that isolates the positive electrode and the negative electrode from each other and prevents short-circuiting between the positive and negative electrodes.

Note that a battery member of a non-aqueous secondary battery may be a member that includes a functional layer containing a binder and also optionally containing particles that are compounded so as to cause the battery member to display a desired function (hereinafter, referred to as "functional particles").

More specifically, a separator that includes an adhesive layer containing a binder and/or a porous membrane containing a binder and non-conductive particles as functional particles on a separator substrate may be used as a separator of a secondary battery. Moreover, an electrode that includes an electrode mixed material layer containing a binder and electrode active material particles as functional particles on a current collector or an electrode that further includes an adhesive layer and/or a porous membrane such as described above on an electrode substrate including an electrode mixed material layer on a current collector may be used as an electrode of a non-aqueous secondary battery.

For example, Patent Literature (PTL) 1 discloses a lithium ion secondary battery in which a separator that includes a porous membrane containing a polymer including a (meth)acrylic acid alkyl ester monomer unit and so forth as a binder and also containing alumina (non-conductive particles) as functional particles on a substrate is used and in which a positive electrode that includes a positive electrode mixed material layer containing a polymer such as polyvinylidene fluoride (PVdF) as a binder and also containing positive electrode active material particles as functional particles on a current collector is used.

Moreover, PTL 2 discloses a lithium ion secondary battery in which a separator that includes a porous membrane containing modified polybutyl acrylate (modified PBA) as a binder and also containing boehmite (non-conductive particles) as functional particles on a substrate is used and in which a positive electrode that includes a positive electrode mixed material layer containing a polymer such as a vinylidene fluoride-chlorotrifluoroethylene copolymer (VDF-CTFE) as a binder and also containing positive electrode active material particles as functional particles on a current collector is used.

CITATION LIST

Patent Literature

  PTL 1: WO2018/180472A1
  PTL 2: WO2018/084046A1

SUMMARY

(Technical Problem)

In recent years, there has been demand for even higher performance in non-aqueous secondary batteries. From a viewpoint of improving battery characteristics such as rate characteristics and cycle characteristics, it is desirable for a non-aqueous secondary battery to have excellent mobility of electrolyte solution inside a cell (hereinafter, also referred to simply as "electrolyte solution mobility").

However, there is room for improvement of electrolyte solution mobility in a non-aqueous secondary battery in which a battery member such as a separator or positive electrode according to the conventional techniques described above is used.

Accordingly, an object of the present disclosure is to provide a non-aqueous secondary battery having excellent electrolyte solution mobility.

(Solution to Problem)

The inventor conducted diligent investigation with the aim of solving the problem set forth above. The inventor discovered that in the case of a non-aqueous secondary battery that includes a positive electrode, a negative electrode, an electrolyte solution, and a separator, electrolyte solution mobility of the non-aqueous secondary battery can be improved by using a positive electrode that includes a positive electrode mixed material layer containing a positive electrode active material, a conductive material, and a specific polymer and by using a separator that includes a porous membrane containing non-conductive particles and a polymer. In this manner, the inventor completed the present disclosure.

Specifically, the present disclosure aims to advantageously solve the problem set forth above, and a presently disclosed non-aqueous secondary battery comprises a positive electrode, a negative electrode, an electrolyte solution, and a separator, wherein the positive electrode includes a current collector and a positive electrode mixed material layer formed on the current collector, the positive electrode mixed material layer contains a positive electrode active material, a conductive material, and a polymer A, the polymer A includes a nitrile group-containing monomer unit and either or both of a conjugated diene monomer unit and an alkylene structural unit, content of the polymer A in the positive electrode mixed material layer is not less than 0.01 mass% and not more than 8 mass%, the separator includes a separator substrate and a porous membrane formed on the separator substrate, and the porous membrane contains non-conductive particles and a polymer B. In the case of a non-aqueous secondary battery that includes at least a positive electrode including a positive electrode mixed material layer containing a positive electrode active material, a conductive material, and a specific polymer and a separator including a porous membrane containing non-conductive particles and a polymer in this manner, this non-aqueous secondary battery can display excellent electrolyte solution mobility.

Note that when a polymer is said to "include a monomer unit" in the present disclosure, this means that "a polymer obtained using that monomer includes a repeating unit derived from the monomer". Moreover, in the present specification, in the case of a polymer that is produced through copolymerization of a plurality of types of monomers, the "proportional content of a monomer unit" that is formed through polymerization of a given monomer is normally, unless otherwise specified, the same as the ratio (charging ratio) of the given monomer among all monomers used in polymerization of the polymer. Furthermore, the "proportional content" of each "monomer unit" in a polymer can be measured by a nuclear magnetic resonance (NMR) method such as $^1$H-NMR or $^{13}$C-NMR.

In the presently disclosed non-aqueous secondary battery, proportional content of the nitrile group-containing monomer unit in the polymer A is preferably not less than 10 mass% and not more than 50 mass%. When the proportional content of the nitrile group-containing monomer unit in the polymer A is within the specific range set forth above, rate characteristics and cycle characteristics of the non-aqueous secondary battery can be improved.

In the presently disclosed non-aqueous secondary battery, the positive electrode mixed material layer preferably has a void fraction of not less than 15% and not more than 50%. When the void fraction of the positive electrode mixed material layer is within the specific range set forth above, electrolyte solution mobility of the non-aqueous secondary battery can be further improved while also ensuring sufficiently high energy density of the non-aqueous secondary battery.

Note that the void fraction of a positive electrode mixed material layer referred to in the present disclosure can be measured by a method described in the EXAMPLES section of the present specification.

In the presently disclosed non-aqueous secondary battery, the polymer B preferably includes a water-insoluble polymer. When a water-insoluble polymer is used as the polymer B, cell windability of the non-aqueous secondary battery can be improved.

In the presently disclosed non-aqueous secondary battery, the water-insoluble polymer preferably includes not less than 1 mass% and not more than 40 mass%, in total, of one or more polar group-containing monomer units selected from the group consisting of an acid group-containing monomer unit, a hydroxyl group-containing monomer unit, an epoxy group-containing monomer unit, an amide group-containing monomer unit, and a nitrile group-containing monomer unit. When the total proportional content of the specific polar group-containing monomer units set forth above in the water-insoluble polymer is within the specific range set forth above, electrolyte solution mobility of the non-aqueous secondary battery can be further improved, and heat shrinkage resistance of the separator can be improved.

Note that the "heat shrinkage resistance of a separator" referred to in the present specification is the heat shrinkage resistance of the separator in a state in which the separator is immersed in electrolyte solution inside a non-aqueous secondary battery (i.e., in electrolyte solution).

In the presently disclosed non-aqueous secondary battery, when total proportional content of the polar group-containing monomer units in the water-insoluble polymer is denoted as X and proportional content of the nitrile group-containing monomer unit in the polymer A is denoted as Y, a ratio X/Y of X and Y is preferably not less than 0.1 and not more than 1.2. When a ratio X/Y of the total proportional content X of the specific polar group-containing monomer units in the water-insoluble polymer and the proportional content Y of the nitrile group-containing monomer unit in the polymer A is within the specific range set forth above, electrolyte solution mobility of the non-aqueous secondary battery can be further improved, and heat shrinkage resistance of the separator can be improved.

In the presently disclosed non-aqueous secondary battery, the water-insoluble polymer preferably includes not less than 40 mass% and not more than 99 mass% of a (meth)acrylic acid ester monomer unit. When the proportional content of a (meth)acrylic acid ester monomer unit in the water-insoluble polymer is within the specific range set forth above, high-potential rate characteristics of the non-aqueous secondary battery can be improved while also ensuring sufficiently high electrolyte solution mobility of the non-aqueous secondary battery and heat shrinkage resistance of the separator.

Note that in the present disclosure, "(meth)acryl" is used to indicate "acryl" and/or "methacryl".

In the presently disclosed non-aqueous secondary battery, the polymer B may only include a water-soluble polymer, and the water-soluble polymer may include a polymer that includes a nitrogen-containing monomer unit.

In the presently disclosed non-aqueous secondary battery, the non-conductive particles may include a particulate polymer, and the particulate polymer may have a glass-transition temperature of higher than 200°C.

Note that the glass-transition temperature of a polymer referred to in the present disclosure can be measured by a method described in the EXAMPLES section of the present specification.

In the presently disclosed non-aqueous secondary battery, total proportional content of a structural unit derived from a conjugated diene monomer polymerized by 1,2-bonding and a structural unit derived from a conjugated diene monomer polymerized by 3,4-bonding in the polymer A is preferably 30 mass% or less. When the total proportional content of a structural unit derived from a conjugated diene monomer polymerized by 1,2-bonding and a structural unit derived from a conjugated diene monomer polymerized by 3,4-bonding in the polymer A is not more than the specific value set forth above, rate characteristics of the non-aqueous secondary battery can be improved.

Note that the total proportional content of a structural unit derived from a conjugated diene monomer polymerized by 1,2-bonding and a structural unit derived from a conjugated diene monomer polymerized by 3,4-bonding in the polymer A can be measured by a method described in the EXAMPLES section of the present specification.

In the presently disclosed non-aqueous secondary battery, the positive electrode mixed material layer and the porous membrane are preferably in contact. When the positive electrode mixed material layer and the porous membrane layer are in contact inside of the presently disclosed non-aqueous secondary battery, electrolyte solution mobility of the non-aqueous secondary battery can be further improved.

(Advantageous Effect)

According to the present disclosure, it is possible to provide a non-aqueous secondary battery having excellent electrolyte solution mobility.

DETAILED DESCRIPTION

The following provides a detailed description of embodiments of the present disclosure.

(Non-aqueous secondary battery)

The presently disclosed non-aqueous secondary battery includes a positive electrode, a negative electrode, an electrolyte solution, and a separator. The positive electrode includes a current collector and a positive electrode mixed material layer formed on the current collector, wherein the positive electrode mixed material layer contains a positive electrode active material, a conductive material, and a specific polymer A. The content of the polymer A in the positive electrode mixed material layer is within a specific range. Moreover, the separator includes a separator substrate and a porous membrane formed on the separator substrate, wherein the porous membrane contains non-conductive particles and a polymer B.

The presently disclosed non-aqueous secondary battery has excellent electrolyte solution mobility as a result of including a positive electrode that includes the above-described positive electrode mixed material layer and a separator that includes the above-described porous membrane. In particular, the presently disclosed non-aqueous secondary battery can display excellent electrolyte solution mobility even in a case in which densification of electrode mixed material layers (positive electrode mixed material layer and negative electrode mixed material layer) is performed with the aim of increasing capacity, for example. Moreover, the presently disclosed non-aqueous secondary battery can display excellent cycle characteristics and rate characteristics (for example, low-temperature rate characteristics and high-potential rate characteristics) as a result of having excellent electrolyte solution mobility.

Battery members such as the positive electrode, the negative electrode, and the separator that are included in the presently disclosed non-aqueous secondary battery are normally arranged such that the positive electrode is located at one surface side of the separator and the negative electrode is located at the other surface side of the separator. More specifically, the battery members may be arranged such that one surface side of the separator and a positive electrode mixed material layer-side of the positive electrode face each other and such that the other surface side of the separator and a negative electrode mixed material layer-side of the negative electrode face each other, for example.

Although the following describes, as one example, a case in which the non-aqueous secondary battery is a lithium ion secondary battery, the presently disclosed non-aqueous secondary battery is not limited to the following example.

<Positive electrode>

The positive electrode that is included in the presently disclosed non-aqueous secondary battery includes a current collector and a positive electrode mixed material layer formed on the current collector.

<<Current collector>>

The current collector is a material having electrical conductivity and electrochemical durability. Specifically, the current collector may, for example, be made of a metal material such as iron, copper, aluminum, nickel, stainless steel, titanium, tantalum, gold, or platinum. One of these materials may be used individually, or two or more of these materials may be used in combination in a freely selected ratio. Of these materials, a thin film formed of aluminum (aluminum foil) is preferable as the current collector used in production of the positive electrode.

<<Positive electrode mixed material layer>>

The positive electrode mixed material layer that is formed on the current collector contains a positive electrode active material, a conductive material, and a specific polymer A. The content of the polymer A in the positive electrode mixed material layer is within a specific range. Note that the positive electrode mixed material layer may optionally further contain components other than the positive electrode active material, the conductive material, and the polymer A (i.e., other components).

{Positive electrode active material}

The positive electrode active material may be a known positive electrode active material such as lithium-containing cobalt oxide ($LiCoO_2$), lithium manganate ($LiMn_2O_4$), lithium-containing nickel oxide ($LiNiO_2$), a lithium-containing complex oxide of Co-Ni-Mn ($Li(Co\ Mn\ Ni)O_2$), a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a $Li_2MnO_3$-$LiNiO_2$-based solid solution, a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, or $LiNi_{0.5}Mn_{1.5}O_4$ without any specific limitations.

The particle diameter of the positive electrode active material is not specifically limited and may be the same as that of a conventionally used positive electrode active material.

-Content in positive electrode mixed material layer-

The content of the positive electrode active material in the positive electrode mixed material layer is not specifically limited so long as it is within a range that yields the desired effects according to the present disclosure, but is preferably 82 mass% or more, more preferably 88 mass% or more, and even more preferably 92 mass% or more, and is preferably 99 mass% or less. When the content of the positive electrode active material in the positive electrode mixed material layer is not less than any of the lower limits set forth above, energy density of the non-aqueous secondary battery can be improved. On the other hand, when the content of the positive electrode active material in the positive electrode mixed material layer is not more than the upper limit set forth above, sufficiently good rate characteristics of the non-aqueous secondary battery can be ensured because the subsequently described conductive material, polymer A, and so forth can be sufficiently contained in the positive electrode mixed material layer.

{Conductive material}

The conductive material may be a conductive carbon such as acetylene black, Ketjenblack, carbon black, graphite, vapor-grown carbon fiber, or carbon nanotubes; carbon powder such as graphite; fiber or foil of any of various metals; or the like, for example. Of these examples, acetylene black and carbon nanotubes are preferable as the conductive material, and carbon nanotubes are more preferable as the conductive material. Note that the carbon nanotubes may be single-walled carbon nanotubes or multi-walled carbon nanotubes.

-Content-

The content of the conductive material in the positive electrode mixed material layer is not specifically limited so long as it is within a range that yields the desired effects according to the present disclosure, but is preferably 0.02 mass% or more, more preferably 0.1 mass% or more, and even more preferably 0.2 mass% or more, and is preferably 10 mass% or less, more preferably 8 mass% or less, even more preferably 5 mass% or less, and further preferably 2 mass% or less. When the content of the conductive material in the positive electrode mixed material layer is not less than any of the lower limits set forth above, rate characteristics of the non-aqueous secondary battery can be improved. On the other hand, when the content of the conductive material in the positive electrode mixed material layer is not more than any of the upper limits set forth above, sufficiently high energy density of the non-aqueous secondary battery can be ensured because the previously described positive electrode active material can be sufficiently contained in the positive electrode mixed material layer.

{Polymer A}

The polymer A that is contained in the positive electrode mixed material layer includes a nitrile group-containing monomer unit and either or both of a conjugated diene monomer unit and an alkylene structural unit. The content of the polymer A in the positive electrode mixed material layer is within a specific range. By using the above-described polymer A in a specific amount in this manner, the polymer A can adsorb well to the previously described conductive material in a slurry composition that is used to form the positive electrode mixed material layer. Consequently, the polymer can be dispersed well with the conductive material in this slurry composition and also in the positive electrode mixed material layer formed using the slurry composition. Moreover, through good dispersion of the polymer A in the positive electrode mixed material layer, electrolyte solution mobility of the non-aqueous secondary battery can be improved because affinity of the positive electrode mixed material layer with the electrolyte solution (electrolyte solution affinity) increases. In particular, the inclusion of a specific amount of the polymer A in the positive electrode mixed material layer makes it possible for the non-aqueous secondary battery to display excellent electrolyte solution mobility even in a case in which the positive electrode mixed material layer is densified with an aim such as increasing the capacity of the non-aqueous secondary battery. Furthermore, rate characteristics of the non-aqueous secondary battery can be improved because the conductive material can be dispersed well in the positive electrode mixed material layer as described above. The inclusion of a specific amount of the polymer A in the positive electrode mixed material layer can also improve cell windability of the non-aqueous secondary battery due to increased flexibility of the positive electrode mixed material layer.

Note that the polymer A may include structural units other than a nitrile group-containing monomer unit, a conjugated diene monomer unit, and an alkylene structural unit within a range that yields the desired effects according to the present disclosure.

-Nitrile group-containing monomer unit-

Examples of nitrile group-containing monomers that can form a nitrile group-containing monomer unit include $\alpha,\beta$-ethylenically unsaturated nitrile monomers. No specific limitations are placed on $\alpha,\beta$-ethylenically unsaturated nitrile monomers that can be used other than being an $\alpha,\beta$-ethylenically unsaturated compound that contains a nitrile group. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Of these examples, acrylonitrile and methacrylonitrile are preferable as nitrile group-containing monomers from a viewpoint of further improving rate characteristics of the non-aqueous secondary battery, with acrylonitrile being more preferable.

One of these nitrile group-containing monomers may be used individually, or two or more of these nitrile group-containing monomers may be used in combination.

The proportional content of nitrile group-containing monomer units in the polymer A when all repeating units (total of structural units and monomer units) in the polymer A are taken to be 100 mass% is preferably 10 mass% or more, more preferably 20 mass% or more, and even more preferably 25 mass% or more, and is preferably 50 mass% or less, more preferably 45 mass% or less, and even more preferably 40 mass% or less. When the proportional content of nitrile group-containing monomer units in the polymer A is not less than any of the lower limits set forth above, rate characteristics of the non-aqueous secondary battery can be further improved. Moreover, when the proportional content of nitrile group-containing monomer units in the polymer A is not less than any of the lower limits set forth above, adhesiveness of the positive electrode and the separator can be improved in a case in which the positive electrode mixed material layer of the positive electrode and a subsequently described adhesive layer of the separator are in contact inside of the non-aqueous secondary battery, for example. On the other hand, when the proportional content of nitrile group-containing monomer units in the polymer A is not more than any of the upper limits set forth above, rate characteristics and cycle characteristics of the non-aqueous secondary battery can be further improved due to the degree of swelling in electrolyte solution of the polymer A being restricted from becoming excessively high.

-Conjugated diene monomer unit-

Examples of nitrile group-containing monomers nitrile group-containing monomers that can form a conjugated diene monomer unit include conjugated diene compounds having a carbon number of 4 or more such as 1,3-butadiene, isoprene, 2,3-dimethyl-1,3-butadiene, 2-ethyl-1,3-butadiene, and 1,3-pentadiene.
Of these examples, 1,3-butadiene is preferable as a conjugated diene monomer from a viewpoint of restricting the degree of swelling in electrolyte solution of the polymer A from becoming excessively high and improving rate characteristics and cycle characteristics of the non-aqueous secondary battery.

-Alkylene structural unit-

An alkylene structural unit is a repeating unit composed of only an alkylene structure represented by a general formula $-C_nH_{2n}-$ (n is an integer of 2 or more).
Although the alkylene structural unit may be linear or branched, the alkylene structural unit is preferably linear (i.e., is preferably a linear alkylene structural unit). Moreover, the carbon number of the alkylene structural unit is preferably 4 or more (i.e., n in the preceding general formula is preferably an integer of 4 or more).
No specific limitations are placed on the method by which the alkylene structural unit is introduced into the polymer. For example, method (1) or (2), set forth below, may be used.

(1) A method in which a polymer is produced from a monomer composition containing a conjugated diene monomer and then the polymer is hydrogenated so as to convert a conjugated diene monomer unit to an alkylene structural unit
(2) A method in which a polymer is produced from a monomer composition containing a 1-olefin monomer

Of these methods, method (1) is preferable in terms of ease of production of the polymer.
In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit).
Note that the 1-olefin monomer may be ethylene, propylene, 1-butene, 1-hexene, or the like, for example.
One of these conjugated diene monomers or 1-olefin monomers may be used individually, or two or more of these conjugated diene monomers or 1-olefin monomers may be used in combination.
The total proportional content of conjugated diene monomer units and alkylene structural units in the polymer A when all repeating units (total of structural units and monomer units) in the polymer A are taken to be 100 mass% is preferably 50 mass% or more, more preferably 55 mass% or more, and even more preferably 60 mass% or more, and is preferably 90 mass% or less, more preferably 80 mass% or less, and even more preferably 75 mass% or less.

-Structural unit derived from conjugated diene monomer polymerized by 1,2-bonding or 3,4-bonding-

Note that a conjugated diene monomer unit in the polymer A may have a structure resulting from polymerization of a conjugated diene monomer by 1,2-bonding (1,2-addition polymerization), may have a structure resulting from polymerization of a conjugated diene monomer by 3,4-bonding (3,4-addition polymerization), or may have a structure resulting from polymerization of a conjugated diene monomer by 1,4-bonding (1,4-addition polymerization).
The total proportional content of structural units derived from a conjugated diene monomer polymerized by 1,2-bonding and structural units derived from a conjugated diene monomer polymerized by 3,4-bonding in the polymer A when all repeating units (total of structural units and monomer units) in the polymer A are taken to be 100 mass% is preferably 30 mass% or less, more preferably 20 mass% or less, and even more preferably 10 mass% or less. When the total proportional content of structural units derived from a conjugated diene monomer polymerized by 1,2-bonding and structural units derived from a conjugated diene monomer polymerized by 3,4-bonding in the polymer A is not more than any of the upper limits set forth above, rate characteristics and cycle characteristics of the non-aqueous secondary battery can be improved because excessive formation of side chain structures in the polymer A can be inhibited, and the degree of swelling in electrolyte solution of the polymer A can be restricted from becoming excessively high.
The lower limit for the total proportional content of structural units derived from a conjugated diene monomer polymerized by 1,2-bonding and structural units derived from a conjugated diene monomer polymerized by 3,4-bonding in the polymer A is not specifically limited and may be 0 mass%, may be 1 mass% or more, or may be 5 mass% or more.
Note that a "structural unit derived from a conjugated diene monomer polymerized by 1,2-bonding" and a "structural unit derived from a conjugated diene monomer polymerized by 3,4-bonding" in the polymer A may be hydrogenated. In other words, the term "structural unit derived from a conjugated diene monomer polymerized by 1,2-bonding" is considered to be inclusive of an alkylene structural unit formed through polymerization of a conjugated diene monomer by 1,2-bonding and subsequent hydrogenation, whereas the term "structural unit derived from a conjugated diene monomer polymerized by 3,4-bonding" is considered to be inclusive of an alkylene structural unit formed through polymerization of a conjugated diene monomer by 3,4-bonding and subsequent hydrogenation.

Moreover, in a case in which the conjugated diene monomer is 1,3-butadiene, the "total proportional content of structural units derived from a conjugated diene monomer polymerized by 1,2-bonding and structural units derived from a conjugated diene monomer polymerized by 3,4-bonding in the polymer A" means the "proportional content of structural units derived from a conjugated diene monomer (1,3-butadiene) polymerized by 1,2-bonding in the polymer A".

Furthermore, the total proportional content of structural units derived from a conjugated diene monomer polymerized by 1,2-bonding and structural units derived from a conjugated diene monomer polymerized by 3,4-bonding in the polymer A can be adjusted through polymerization conditions (for example, polymerization temperature, supply method of monomer units, and type and amount of used molecular weight modifier) in production of the polymer A, for example.

-Production method of polymer A-

No specific limitations are placed on the method by which the above-described polymer A is produced. For example, the polymer A can be produced by polymerizing a monomer composition containing the monomers described above to obtain a polymer and subsequently hydrogenating the obtained polymer as necessary.

The proportional content of each monomer in the monomer composition used to produce the polymer can be set in accordance with the proportional content of each repeating unit in the polymer.

Additives such as an emulsifier, a dispersant, a polymerization initiator, a polymerization aid, and/or a molecular weight modifier used in polymerization may be the same as typically used. The amounts of these additives may also be the same as typically used. The polymerization conditions can be adjusted as appropriate depending on the polymerization method, the type of polymerization initiator, and so forth.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction.

The hydrogenation can be carried out by a known hydrogenation method such as an oil-layer hydrogenation method or a water-layer hydrogenation method. The catalyst used in the hydrogenation may be any selective hydrogenation catalyst that is commonly known such as a palladiumbased catalyst or a rhodium-based catalyst. Two or more of such catalysts may be used in combination.

-Iodine value-

The iodine value of the polymer A can be set as 100 mg/100 mg or less, and is preferably 80 mg/100 mg or less, more preferably 60 mg/100 mg or less, and even more preferably 40 mg/100 mg or less. When the iodine value of the polymer A is not more than any of the upper limits set forth above, rate characteristics of the non-aqueous secondary battery can be further improved because adsorptivity of the polymer A to the conductive material improves, and even better dispersion of the conductive material in the positive electrode mixed material layer can be achieved.

Note that the lower limit for the iodine value of the polymer A is not specifically limited and may be 1 mg/100 mg or more, may be 5 mg/100 mg or more, or may be 10 mg/100 mg or more, for example.

Also note that the iodine value of the polymer A can be measured by a method in accordance with JIS K6235(2006).

-Weight-average molecular weight (Mw)-

The weight-average molecular weight (Mw) of the polymer A is preferably 500,000 or less, more preferably 300,000 or less, even more preferably 170,000 or less, and further preferably 100,000 or less, and is preferably 5,000 or more. When the weight-average molecular weight (Mw) of the polymer A is not more than any of the upper limits set forth above, rate characteristics of the non-aqueous secondary battery can be further improved because adsorptivity of the polymer A to the conductive material improves, and even better dispersion of the conductive material in the positive electrode mixed material layer can be achieved. On the other hand, when the weight-average molecular weight (Mw) of the polymer A is not less than the lower limit set forth above, cycle characteristics of the non-aqueous secondary battery can be improved because elution of the polymer A into the electrolyte solution can be inhibited.

Note that the weight-average molecular weight of a polymer can be measured by a method described in the EXAMPLES section of the present specification.

-Content in positive electrode mixed material layer-

The content of the polymer A in the positive electrode mixed material layer is required to be 0.01 mass% or more, and is preferably 0.05 mass% or more, and more preferably 0.08 mass% or more. Moreover, the content of the polymer A in the positive electrode mixed material layer is required to be 8 mass% or less, and is preferably 4 mass% or less, and more preferably 3 mass% or less. When the content of the polymer A in the positive electrode mixed material layer is not less than any of the lower limits set forth above, electrolyte solution affinity of the positive electrode mixed material layer can be sufficiently increased, and electrolyte solution mobility of the non-aqueous secondary battery can be improved. Moreover, when the content of the polymer A in the positive electrode mixed material layer is not less than any of the lower limits set forth above, rate characteristics of the non-aqueous secondary battery can be improved because the conductive material can be dispersed well in the positive electrode mixed material layer. Furthermore, when the content of the polymer A in the positive electrode mixed material layer is not less than any of the lower limits set forth above, flexibility of the positive electrode mixed material layer can be sufficiently increased, and cell windability of the non-aqueous secondary battery can be improved. On the other hand, when the content of the polymer A in the positive electrode mixed material layer is not more than any of the upper limits set forth above, restriction of movement of the electrolyte solution due to an excessive amount of the polymer A can be inhibited, and sufficiently high electrolyte solution mobility of the non-aqueous secondary battery can be ensured.

{Other components}

The positive electrode mixed material layer may optionally contain other components besides the components described above.
Polymers having different chemical compositions from the polymer A described above, known additives such as described in JP2013-179040A, and so forth can be used as other components.
For example, a fluoropolymer can be used as a polymer having a different chemical composition from the polymer A described above. The fluoropolymer is a polymer that includes a fluorine-containing monomer unit. Specific examples of fluoropolymers include polyvinylidene fluoride (PVdF), a copolymer of vinylidene fluoride and hexafluoropropylene (PVdF-HFP), and the like that are described in JP2018-174150A, for example.
In a case in which a fluoropolymer is used as a polymer having a different chemical composition from the polymer A, the content of the fluoropolymer in the positive electrode mixed material layer can be adjusted within a range that yields the desired effects according to the present disclosure.

{Density}

The density of the positive electrode mixed material layer can be adjusted as appropriate depending on the type of positive electrode active material that is contained in the positive electrode mixed material layer. Energy density of the non-aqueous secondary battery can be improved by increasing the density of the positive electrode mixed material layer. On the other hand, electrolyte solution mobility of the non-aqueous secondary battery can be further improved by decreasing the density of the positive electrode mixed material layer. Moreover, cell windability and rate characteristics of the non-aqueous secondary battery can also be further improved by decreasing the density of the positive electrode mixed material layer.
Note that the density of a positive electrode mixed material layer can be measured by a method described in the EXAMPLES section of the present specification.
Also note that the density of the positive electrode mixed material layer can be adjusted through the types and amounts of components contained in the positive electrode mixed material layer, such as the positive electrode active material, the conditions of pressing in a production method of the positive electrode, and so forth, for example.

{Mass per unit area}

The mass per unit area of the positive electrode mixed material layer can be adjusted as appropriate depending on the type of positive electrode active material contained in the positive electrode mixed material layer. The capacity of the non-aqueous secondary battery can be increased by increasing the mass per unit area of the positive electrode mixed material layer. On the other hand, entry and exit of lithium ions from the positive electrode mixed material layer is facilitated and higher output can be achieved by decreasing the mass per unit area of the positive electrode mixed material layer.
Note that the mass per unit area of a positive electrode mixed material layer can be measured by a method described in the EXAMPLES section of the present specification.
Also note that the mass per unit area of the positive electrode mixed material layer can be adjusted through the types and amounts of components contained in the positive electrode mixed material layer, such as the positive electrode active material, the coating weight of a slurry composition for a positive electrode mixed material layer on the current collector in a subsequently described production method of the positive electrode, and so forth, for example.

{Void fraction}

The void fraction of the positive electrode mixed material layer is preferably 15% or more, more preferably 21% or more, even more preferably 24% or more, and further preferably 28% or more, and is preferably 50% or less, more preferably 45% or less, even more preferably 40% or less, and further preferably 37% or less. When the void fraction of the positive electrode mixed material layer is not less than any of the lower limits set forth above, electrolyte solution mobility of the non-aqueous secondary battery can be further improved. Moreover, when the void fraction of the positive electrode mixed material layer is not less than any of the lower limits set forth above, cell windability and rate characteristics of the non-aqueous secondary battery can be further improved. Furthermore, when the void fraction of the positive electrode mixed material layer is not more than any of the upper limits set forth above, sufficiently high energy density of the non-aqueous secondary battery can be ensured.

Note that the void fraction of the positive electrode mixed material layer can be adjusted through the types and amounts of components contained in the positive electrode mixed material layer, such as the positive electrode active material, the conditions of pressing in a production method of the positive electrode, and so forth, for example.

<<Production method of positive electrode>>

The positive electrode included in the presently disclosed non-aqueous secondary battery can be produced through a step of applying a slurry composition for a positive electrode mixed material layer containing the above-described positive electrode active material, conductive material, polymer A, and other components that can optionally be used onto the current collector (application step) and a step of drying the slurry composition that has been applied onto the current collector to form a positive electrode mixed material layer on the current collector (drying step), for example, but is not specifically limited to being produced in this manner.

{Slurry composition for positive electrode mixed material layer}

The slurry composition for a positive electrode mixed material layer can be produced by, for example, dissolving or dispersing the above-described positive electrode active material, conductive material, polymer A, and other components that can optionally be used in a solvent.

Specifically, the slurry composition for a positive electrode mixed material layer can be produced by mixing the above-described components and the solvent using a mixer such as a ball mill, a sand mill, a bead mill, a pigment disperser, a grinding machine, an ultrasonic disperser, a homogenizer, a planetary mixer, or a FILMIX.

The solvent is not specifically limited and may be an organic solvent such as N-methylpyrrolidone (NMP), N,N-dimethylformamide, or acetone, for example. Of these solvents, N-methylpyrrolidone (NMP) is preferable from a viewpoint of solubility of the polymer A and stability of the slurry composition for a positive electrode mixed material layer.

Note that the slurry composition for a positive electrode mixed material layer may be produced by mixing the conductive material and the polymer A in the solvent to produce a conductive material dispersion liquid and subsequently further mixing this conductive material dispersion liquid with the positive electrode active material and other components in the solvent.

{Application step}

The slurry composition for a positive electrode mixed material layer can be applied onto the current collector by any commonly known method without any specific limitations. Specific examples of application methods that can be used include doctor blading, dip coating, reverse roll coating, direct roll coating, gravure coating, extrusion coating, and brush coating. The slurry composition for a positive electrode mixed material layer may be applied onto just one side of the current collector or may be applied onto both sides of the current collector. The thickness of the slurry coating on the current collector after application but before drying may be set as appropriate in accordance with the thickness of the positive electrode mixed material layer to be obtained after drying.

{Drying step}

The slurry composition for a positive electrode mixed material layer on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition for a positive electrode mixed material layer on the current collector in this manner, a positive electrode mixed material layer can be formed on the current collector to thereby obtain a positive electrode for a non-aqueous secondary battery that includes the current collector and the positive electrode mixed material layer.

After the drying step, the positive electrode mixed material layer may be further subjected to a pressing process such as mold pressing or roll pressing. The pressing process can improve adhesiveness of the positive electrode mixed material layer and the current collector. Moreover, the pressing process makes it easy to adjust the density and the void fraction of the positive electrode mixed material layer to within any of the specific ranges set forth above.

<Negative electrode>

Known positive electrodes and negative electrodes that are used in non-aqueous secondary batteries can be used as the negative electrode.

Specifically, an electrode having a negative electrode mixed material layer formed on a current collector can be used as the negative electrode without any specific limitations. Note that the current collector, components in the negative electrode mixed material layer (for example, a negative electrode active material and a binder for a negative electrode mixed material layer), and the method by which the electrode mixed material layer is formed on the current collector may be known examples thereof. Specifically, any of those described in JP2013-145763A, for example, can be adopted.

<Electrolyte solution>

The electrolyte solution is normally an organic electrolyte solution obtained by dissolving a supporting electrolyte in an organic solvent. For example, when the non-aqueous secondary battery is a lithium ion secondary battery, a lithium salt is used as the supporting electrolyte. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

Known additives such as vinylene carbonate (VC), fluoroethylene carbonate (FEC), and ethyl methyl sulfone may be added to the electrolyte solution.

<Separator>

The separator that is included in the presently disclosed non-aqueous secondary battery includes a separator substrate and a porous membrane formed on the separator substrate. Note that in the present specification, a separator that includes a separator substrate and a porous membrane formed on the separator substrate may be referred to as a "porous membrane-equipped separator".

By using a separator that includes a porous membrane containing non-conductive particles and a polymer B in the non-aqueous secondary battery, it is possible to increase electrolyte solution mobility of the non-aqueous secondary battery. Moreover, the separator including this porous membrane can display excellent heat resistance inside of the non-aqueous secondary battery.

<<Separator substrate>>

The separator substrate is not specifically limited and may be a known separator substrate such as an organic separator substrate, for example. The organic separator substrate is a porous member that is formed of an organic material. The organic separator substrate may, for example, be a microporous membrane or non-woven fabric containing a polyolefin resin such as polyethylene or polypropylene, an aromatic polyamide resin, or the like, and is preferably a microporous membrane or non-woven fabric made of polyethylene due to the excellent strength thereof. Note that although the organic separator substrate can be of any thickness, the thickness of the organic separator substrate is normally 0.5 $\mu$m or more, and preferably 5 $\mu$m or more, and is normally 40 $\mu$m or less, preferably 30 $\mu$m or less, and more preferably 20 $\mu$m or less.

<<Porous membrane>>

The porous membrane that is formed on the separator substrate contains non-conductive particles and a polymer B. Note that the porous membrane may further contain components other than the non-conductive particles and the polymer B (i.e., other components) within a range that yields the desired effects according to the present disclosure.
The porous membrane can increase electrolyte solution mobility of the non-aqueous electrolyte solution as a result of having a porous structure. Moreover, the porous membrane can impart excellent heat shrinkage resistance to the separator inside of the non-aqueous secondary battery.
The porous membrane that is formed on the separator substrate is preferably in contact with the previously described positive electrode mixed material layer of the positive electrode inside of the presently disclosed non-aqueous secondary battery. Through the porous membrane that has a porous structure and the positive electrode mixed material layer that has excellent electrolyte solution affinity as previously described being in contact, electrolyte solution mobility of the non-aqueous secondary battery can be further improved.
Note that although a porous membrane may be formed on just one side of the separator substrate or porous membranes may be formed on both sides of the separator substrate in the separator that is included in the presently disclosed non-aqueous secondary battery, it is preferable that a porous membrane is formed on at least a surface at a positive electrode-side of the separator substrate from a viewpoint of enabling the porous membrane and the positive electrode mixed material layer to be in contact as previously described, and it is more preferable that a porous membrane is formed on only the surface at the positive electrode-side of the separator substrate from a viewpoint of ensuring sufficiently high electrolyte solution mobility and cell windability of the non-aqueous secondary battery.
Moreover, although any other layer may be formed between the porous membrane and the separator substrate to the extent that the desired effects according to the present disclosure are obtained, it is preferable that the porous membrane is formed directly on the surface of the separator substrate without another layer or the like present between the porous membrane and the separator substrate from a viewpoint of ensuring sufficiently high electrolyte solution mobility of the non-aqueous secondary battery.

{Non-conductive particles}

The non-conductive particles are particles that are not electrically conductive and that maintain a particulate form in the electrolyte solution of the non-aqueous secondary battery. Moreover, the non-conductive particles are a material that can impart heat shrinkage resistance to the separator.
The non-conductive particles are not specifically limited so long as they are electrochemically stable particles that are stably present in the environment of use of the non-aqueous secondary battery, and either inorganic particles or organic particles can be used as the non-conductive particles. It is preferable to use inorganic particles as the non-conductive particles from a viewpoint of further improving heat shrinkage resistance of the separator in the non-aqueous secondary battery.

=Non-conductive inorganic particles=

Examples of inorganic particles that are not electrically conductive (non-conductive inorganic particles) include particles of oxides such as aluminum oxide (alumina), hydrous aluminum oxide (boehmite (AlOOH)), gibbsite (Al(OH)$_3$), silicon oxide, magnesium oxide (magnesia), magnesium hydroxide, calcium oxide, titanium oxide (titania), barium titanate (BaTiO$_3$), ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc and montmorillonite. These particles may be subjected to element substitution, surface treatment, solid solution treatment, or the like as necessary.
One of the types of non-conductive inorganic particles described above may be used individually, or two or more of the types of non-conductive inorganic particles described above may be used in combination. The non-conductive particles are preferably aluminum oxide or hydrous aluminum oxide, and are more preferably aluminum oxide.

=Non-conductive organic particles=

The organic particles that are not electrically conductive (non-conductive organic particles) are not specifically limited. For example, a particulate polymer can be used.

The particulate polymer serving as the non-conductive organic particles preferably has a glass-transition temperature of higher than 200°C from a viewpoint of ensuring sufficiently high stability of the non-conductive organic particles and heat shrinkage resistance of the separator inside of the non-aqueous secondary battery. Moreover, the particulate polymer serving as the non-conductive organic particles preferably has a degree of swelling of less than a factor of 1.2 in the electrolyte solution from a viewpoint of ensuring sufficiently high stability of the non-conductive organic particles and heat shrinkage resistance of the separator inside of the non-aqueous secondary battery.

Note that the glass-transition temperature of the particulate polymer can be adjusted through the chemical composition of the particulate polymer.

Also note that the degree of swelling in electrolyte solution of a polymer can be measured by a method described in the EXAMPLES section of the present specification.

It is preferable that the particulate polymer includes a cross-linkable monomer unit from a viewpoint of adjusting the glass-transition temperature thereof to higher than 200°C.

A monomer that can form a cross-linked structure when polymerized may be used as a cross-linkable monomer that can form a cross-linkable monomer unit. Specifically, a monofunctional monomer that includes a thermally cross-linkable group and one ethylenically unsaturated bond per molecule or a polyfunctional monomer that includes two or more ethylenically unsaturated bonds per molecule may be used. Examples of the thermally cross-linkable group included in the monofunctional monomer include an epoxy group, an N-methylol amide group, an oxetanyl group, an oxazoline group, and combinations thereof.

The cross-linkable monomer may be hydrophobic or hydrophilic.

When a cross-linkable monomer is referred to as "hydrophobic" in the present disclosure, this means that the cross-linkable monomer does not have a hydrophilic group, and when a cross-linkable monomer is referred to as "hydrophilic" in the present disclosure, this means that the cross-linkable monomer has a hydrophilic group. The term "hydrophilic group" used with respect to a cross-linkable monomer refers to a carboxy group, a hydroxyl group, a sulfo group, a phosphate group, an epoxy group, a thiol group, an aldehyde group, an amide group, an oxetanyl group, or an oxazoline group.

Examples of hydrophobic cross-linkable monomers include polyfunctional (meth)acrylates such as allyl (meth)acrylate, ethylene di(meth)acrylate, ethylene glycol di(meth)acrylate, diethylene glycol di(meth)acrylate, triethylene glycol di(meth)acrylate, tetraethylene glycol di(meth)acrylate, and trimethylolpropane tri(meth)acrylate; polyfunctional allyl/vinyl ethers such as dipropylene glycol diallyl ether, polyglycol diallyl ether, triethylene glycol divinyl ether, hydroquinone diallyl ether, and tetraallyloxyethane; and divinylbenzene.

Examples of hydrophilic cross-linkable monomers include vinyl glycidyl ether, allyl glycidyl ether, N-methylolacrylamide, acrylamide, and allylmethacrylamide.

Note that one of these cross-linkable monomers may be used individually, or two or more of these cross-linkable monomers may be used in combination. Of these examples, ethylene glycol dimethacrylate is preferably used as a cross-linkable monomer.

The proportional content of cross-linkable monomer units in the particulate polymer is preferably 55 mass% or more, more preferably 65 mass% or more, and even more preferably 75 mass% or more, and is preferably 95 mass% or less. When the proportional content of cross-linkable monomer units in the particulate polymer is not less than any of the lower limits set forth above, the glass-transition temperature of the particulate polymer can easily be adjusted to higher than 200°C, and the degree of swelling in electrolyte solution of the particulate polymer can be adjusted to less than a factor of 1.2. On the other hand, when the proportional content of cross-linkable monomer units in the particulate polymer is not more than the upper limit set forth above, a good particulate polymer can be obtained.

The particulate polymer may further include monomer units other than a cross-linkable monomer unit.

Examples of monomers than can form other monomer units include, but are not specifically limited to, (meth)acrylic acid ester monomers, acid group-containing monomers, and so forth. Note that examples of (meth)acrylic acid ester monomers and acid group-containing monomers that can be used include (meth)acrylic acid ester monomers and acid group-containing monomers given as examples of monomers that can be used to produce a water-insoluble polymer as the subsequently described polymer B, for example.

The proportional content of other monomer units in the particulate polymer is preferably 5 mass% or more, and is preferably 45 mass% or less, more preferably 35 mass% or less, and even more preferably 25 mass% or less. When the proportional content of other monomer units in the particulate polymer is not less than the lower limit set forth above, a good particulate polymer can be obtained. On the other hand, when the proportional content of other monomer units in the particulate polymer is not more than any of the upper limits set forth above, the glass-transition temperature of the particulate polymer can easily be adjusted to higher than 200°C.

Note that the particulate polymer serving as the non-conductive organic particles is taken to be a polymer having a different chemical composition from the subsequently described polymer B.

The particulate polymer serving as the non-conductive organic particles can be produced through polymerization of a monomer composition containing the monomers described above, carried out in an aqueous solvent such as water, for example. The proportional content of each monomer in the monomer composition can be set in accordance with the proportional content of each repeating unit (monomer unit) in the particulate polymer.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction. In the polymerization, seed particles may be used to perform seeded polymerization. The polymerization conditions can be adjusted as appropriate depending on the polymerization method, for example.

Moreover, additives such as emulsifiers, polymerization initiators, and polymerization aids can be used in the polymerization.

The emulsifier, polymerization initiator, and polymerization aid can be typically used examples thereof, and the amounts thereof can also be the same as are typically used.

=Volume-average particle diameter=

Although no specific limitations are placed on the volume-average particle diameter of the non-conductive particles, such as the above-described non-conductive inorganic particles and non-conductive organic particles, so long as the desired effects according to the present disclosure are obtained, the volume-average particle diameter of the non-conductive particles is preferably 50 nm or more, and more preferably 300 nm or more, and is preferably 1,200 nm or less, and more preferably 800 nm or less, for example.

Note that the "volume-average particle diameter" referred to in the present disclosure is the particle diameter D50 at which, in a particle diameter distribution (by volume) measured by laser diffraction/scattering, cumulative volume calculated from a small diameter end of the distribution reaches 50%.

{Polymer B}

The polymer B that is contained in the porous membrane layer is a component that functions as a binder.

The polymer B contained in the porous membrane is not specifically limited so long as it is a polymer other than the previously described particulate polymer serving as non-conductive organic particles and may be either a water-insoluble polymer or a water-soluble polymer.

Moreover, although the polymer B may include just either one of a water-insoluble polymer and a water-soluble polymer or may contain both a water-insoluble polymer and a water-soluble polymer, it is preferable that the polymer B includes at least a water-insoluble polymer from a viewpoint of increasing flexibility of the separator including the porous membrane and improving cell windability of the non-aqueous secondary battery.

Note that the term "water-soluble polymer" as used in the present disclosure refers to a polymer for which insoluble content is less than 1.0 mass% when 0.5 g of the polymer is dissolved in 100 g of water at a temperature of 25°C. Moreover, the term "water-insoluble polymer" as used in the present disclosure refers to a polymer for which insoluble content is 90 mass% or more when 0.5 g of the polymer is dissolved in 100 g of water at 25°C.

-Water-insoluble polymer-

The water-insoluble polymer is not specifically limited but preferably includes one or more polar group-containing monomer units selected from the group consisting of an acid group-containing monomer unit, a hydroxyl group-containing monomer unit, an epoxy group-containing monomer unit, an amide group-containing monomer unit, and a nitrile group-containing monomer unit. When the water-insoluble polymer includes any of the specific polar group-containing monomer units set forth above, electrolyte solution mobility of the non-aqueous secondary battery and heat shrinkage resistance of the separator can be further improved, which is presumed to be due to interactions between the water-insoluble polymer in the porous membrane and the polymer A in the positive electrode mixed material layer in a case in which the porous membrane and the positive electrode mixed material layer are in contact inside of the non-aqueous secondary battery.

Note that the water-insoluble polymer preferably includes a (meth)acrylic acid ester monomer unit other than the specific polar group-containing monomer units described above. When the water-insoluble polymer further includes a (meth)acrylic acid ester monomer unit, high-potential rate characteristics of the non-aqueous secondary battery can be improved due to increased oxidation resistance of the water-insoluble polymer.

The water-insoluble polymer may further include monomer units other than the specific polar group-containing monomers described above and a (meth)acrylic acid ester monomer unit (i.e., other monomer units).

=Polar group-containing monomer units=

==Acid group-containing monomer unit==

Examples of acid group-containing monomers that can form an acid group-containing monomer unit include monomers having an acid group such as carboxy group-containing monomers, sulfo group-containing monomers, and phosphate group-containing monomers.

Moreover, examples of carboxy group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present disclosure, "(meth)allyl" is used to indicate "allyl" and/or "methallyl", and "(meth)acryloyl" is used to indicate "acryloyl" and/or "methacryloyl".

Of these examples, carboxy group-containing monomers are preferable, monocarboxylic acids are more preferable, and methacrylic acid is even more preferable as an acid group-containing monomer.

One acid group-containing monomer may be used individually, or two or more acid group-containing monomers may be used in combination in a freely selected ratio.

In a case in which the water-insoluble polymer includes an acid group-containing monomer unit, the proportional content of acid group-containing monomer units in the water-insoluble polymer is preferably 0.1 mass% or more, more preferably 0.5 mass% or more, even more preferably 1 mass% or more, and further preferably 2 mass% or more, and is preferably 10 mass% or less, more preferably 8 mass% or less, and even more preferably 5 mass% or less. When the proportional content of acid group-containing monomer units in the water-insoluble polymer is within any of the specific ranges set forth above, electrolyte solution mobility of the non-aqueous secondary battery and heat shrinkage resistance of the separator can be even further improved.

==Hydroxyl group-containing monomer unit==

Examples of hydroxyl group-containing monomers that can form a hydroxyl group-containing monomer unit include hydroxyl group-containing vinyl monomers, but are not specifically limited thereto. A hydroxyl group-containing vinyl monomer is a monofunctional compound that includes a hydroxyl group (-OH) and a vinyl group (-CH=CH$_2$) or an isopropenyl group (-C(CH$_3$)=CH$_2$) and that has one ethylenically unsaturated bond (C=C) of the vinyl group in a molecule thereof. Examples of hydroxyl group-containing vinyl monomers include 2-hydroxyethyl acrylate, 2-hydroxyethyl methacrylate, 2-hydroxypropyl acrylate, 2-hydroxypropyl methacrylate, N-hydroxymethylacrylamide (N-methylolacrylamide), N-hydroxymethylmethacrylamide, N-hydroxyethylacrylamide, and N-hydroxyethylmethacrylamide. Of these hydroxyl group-containing vinyl monomers, N-hydroxymethylacrylamide (N-methylolacrylamide) is preferable. One of these hydroxyl group-containing vinyl monomers may be used individually, or two or more of these hydroxyl group-containing vinyl monomers may be used in combination in a freely selected ratio.

Note that a hydroxyl group-containing vinyl monomer that also includes an amide group, such as N-hydroxymethylacrylamide (N-methylolacrylamide), for example, is treated as a "hydroxyl group-containing monomer" in the present disclosure.

In a case in which the water-insoluble polymer includes a hydroxyl group-containing monomer unit, the proportional content of hydroxyl group-containing monomer units in the water-insoluble polymer is preferably 0.1 mass% or more, more preferably 0.5 mass% or more, and even more preferably 2 mass% or more, and is preferably 10 mass% or less, more preferably 8 mass% or less, and even more preferably 5 mass% or less. When the proportional content of hydroxyl group-containing monomer units in the water-insoluble polymer is within any of the specific ranges set forth above, electrolyte solution mobility of the non-aqueous secondary battery and heat shrinkage resistance of the separator can be even further improved.

==Epoxy group-containing monomer unit==

Examples of epoxy group-containing monomers that can form an epoxy group-containing monomer unit include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl 4-heptenoate, glycidyl sorbate, glycidyl linoleate, glycidyl 4-methyl-3-pentenoate, glycidyl ester of 3-cyclohexenecarboxylic acid, and glycidyl ester of 4-methyl-3-cyclohexenecarboxylic acid. One of these epoxy group-containing monomers may be used individually, or two or more of these epoxy group-containing monomers may be used in combination in a freely selected ratio.

Of these examples, allyl glycidyl ether (AGE) and glycidyl methacrylate (GMA) are preferable as epoxy group-containing monomers.

In a case in which the water-insoluble polymer includes an epoxy group-containing monomer unit, the proportional content of epoxy group-containing monomer units in the water-insoluble polymer is preferably 0.1 mass% or more, more preferably 0.2 mass% or more, and even more preferably 0.5 mass% or more, and is preferably 5 mass% or less, more preferably 4 mass% or less, and even more preferably 3 mass% or less. When the proportional content of epoxy group-containing monomer units in the water-insoluble polymer is within any of the specific ranges set forth above, electrolyte solution mobility of the non-aqueous secondary battery and heat shrinkage resistance of the separator can be even further improved. Note that the proportional content of epoxy group-containing monomer units in the water-insoluble polymer may be not less than 15 mass% and not more than 25 mass%, for example.

==Amide group-containing monomer unit==

Examples of amide group-containing monomers that can form an amide group-containing monomer unit include N-vinylacetamide, (meth)acrylamide, dimethyl(meth)acrylamide, diethyl(meth)acrylamide, N-methoxymethyl(meth)acrylamide, and dimethylaminopropyl(meth)acrylamide. One of these amide group-containing monomers may be used individually, or two or more of these amide group-containing monomers may be used in combination in a freely selected ratio.

Of these examples, acrylamide is preferable as an amide group-containing monomer.

In a case in which the water-insoluble polymer includes an amide group-containing monomer unit, the proportional content of amide group-containing monomer units in the water-insoluble polymer is preferably 0.1 mass% or more, more preferably 0.2 mass% or more, and even more preferably 0.5 mass% or more, and is preferably 5 mass% or less, more preferably 4 mass% or less, and even more preferably 3 mass% or less. When the proportional content of amide group-containing monomer units in the water-insoluble polymer is within any of the specific ranges set forth above, electrolyte solution mobility of the non-aqueous secondary battery and heat shrinkage resistance of the separator can be even further improved.

==Nitrile group-containing monomer unit==

Examples of nitrile group-containing monomers that can form a nitrile group-containing monomer unit include those given as examples of nitrile group-containing monomers that can be used in production of the previously described polymer A in the positive electrode mixed material layer. Of these examples, acrylonitrile and methacrylonitrile are preferable, and acrylonitrile is more preferable as a nitrile group-containing monomer.

In a case in which the water-insoluble polymer includes a nitrile group-containing monomer unit, the proportional content of nitrile group-containing monomer units in the water-insoluble polymer is preferably 0.5 mass% or more, more preferably 4 mass% or more, and even more preferably 5 mass% or more, and is preferably 30 mass% or less, more preferably 25 mass% or less, and even more preferably 20 mass% or less. When the proportional content of nitrile group-containing monomer units in the water-insoluble polymer is within any of the specific ranges set forth above, electrolyte solution mobility of the non-aqueous secondary battery and heat shrinkage resistance of the separator can be even further improved.

==Total content of polar group-containing monomer units==

The total proportional content of the above-described specific polar group-containing monomer units in the water-insoluble polymer is preferably 1 mass% or more, more preferably 6 mass% or more, and even more preferably 10 mass% or more, and is preferably 40 mass% or less, more preferably 36 mass% or less, and even more preferably 32 mass% or less. When the total proportional content of the above-described specific polar group-containing monomer units in the water-insoluble polymer is within any of the specific ranges set forth above, electrolyte solution mobility of the non-aqueous secondary battery and heat shrinkage resistance of the separator can be even further improved.

=Relationship with polymer A in positive electrode mixed material layer=

When the total proportional content of the above-described specific polar group-containing monomer units in the water-insoluble polymer is denoted as X and the proportional content of nitrile group-containing monomer units in the previously described polymer A contained in the positive electrode mixed material layer is denoted as Y, a ratio X/Y of X and Y is preferably 0.10 or more, more preferably 0.18 or more, and even more preferably 0.25 or more, and is preferably 1.20 or less, more preferably 1.00 or less, and even more preferably 0.80 or less. When the ratio X/Y of X and Y described above is within any of the specific ranges set forth above, electrolyte solution mobility of the non-aqueous secondary battery and heat shrinkage resistance of the separator can be even further improved, which is presumed to be due to interactions between the water-insoluble polymer in the porous membrane and the polymer A in the positive electrode mixed material layer described above increasing.

=(Meth)acrylic acid ester monomer unit=

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One of these (meth)acrylic acid ester monomers may be used individually, or two or more of these (meth)acrylic acid ester monomers may be used in combination in a freely selected ratio.

Of these examples, acrylic acid alkyl esters are preferable, n-butyl acrylate and 2-ethylhexyl acrylate are more preferable, and n-butyl acrylate is even more preferable as a (meth)acrylic acid ester monomer.

Note that (meth)acrylic acid ester monomers including the specific polar groups described above (acid group, hydroxyl group, epoxy group, amide group, and nitrile group) are each treated as a specific polar group-containing monomer such as previously described in the present disclosure.

The proportional content of (meth)acrylic acid ester monomer units in the water-insoluble polymer is preferably 40 mass% or more, more preferably 55 mass% or more, even more preferably 70 mass% or more, and further preferably 80 mass% or more, and is preferably 99 mass% or less, more preferably 95 mass% or less, and even more preferably 90 mass% or less. When the proportional content of (meth)acrylic acid ester monomer units in the water-insoluble polymer is not less than any of the lower limits set forth above, high-potential rate characteristics of the non-aqueous secondary battery can be further improved. On the other hand, when the proportional content of (meth)acrylic acid ester monomer units in the water-insoluble polymer is not more than any of the upper limits set forth above, sufficiently high electrolyte solution mobility of the non-aqueous secondary battery and heat shrinkage resistance of the separator can be ensured through sufficient inclusion of the above-described specific polar group-containing monomer units in the water-insoluble polymer.

=Other monomer units=

Examples of other monomer units include, but are not specifically limited to, a cross-linkable monomer unit, an aromatic vinyl monomer unit, and so forth.

Examples of aromatic vinyl monomers that can form an aromatic vinyl monomer unit include aromatic monovinyl compounds such as styrene, α-methylstyrene, p-t-butylstyrene, butoxystyrene, vinyltoluene, chlorostyrene, and vinylnaphthalene. Of these aromatic vinyl monomers, styrene is preferable. One of these aromatic vinyl monomers may be used individually, or two or more of these aromatic vinyl monomers may be used in combination.

Examples of cross-linkable monomers that can form a cross-linkable monomer unit include the cross-linkable monomers given as examples of monomers that can be used to produce the previously described particulate polymer serving as non-conductive organic particles, with the exception of monomers including the specific polar groups (acid group, hydroxyl group, epoxy group, amide group, and nitrile group). Of these examples, allyl methacrylate is preferable as a cross-linkable monomer.

Note that the proportional content of other monomer units in the water-insoluble polymer can be adjusted as appropriate within a range that yields the desired effects according to the present disclosure.

=Production method of water-insoluble polymer=

The water-insoluble polymer can be produced through polymerization of a monomer composition containing the monomers described above, carried out in an aqueous solvent such as water, for example. The proportional content of each monomer in the monomer composition can be set in accordance with the proportional content of each repeating unit (monomer unit) in the organic particles.

The polymerization method of the water-insoluble polymer is not specifically limited and may be solution polymerization, suspension polymerization, bulk polymerization, emulsion polymerization, or the like, for example. Moreover, the polymerization reaction may be addition polymerization such as ionic polymerization, radical polymerization, or living radical polymerization. An emulsifier, dispersant, polymerization initiator, or the like used in polymerization may be the same as typically used and the amount thereof may also be the same as typically used.

In a water dispersion of the water-insoluble polymer obtained through polymerization performed in an aqueous solvent, for example, the volume-average particle diameter of the water-insoluble polymer is not specifically limited and may be 10 nm or more, may be 50 nm or more, may be 100 nm or more, or may be 140 nm or more, and may be 1,000 nm or less, may be 500 nm or less, or may be 300 nm or less.

Note that the water-insoluble polymer may have any form in the porous membrane of the separator that is included in the presently disclosed non-aqueous secondary battery. For example, the water-insoluble polymer may have a particulate form or may have a form other than a particulate form.

=Glass-transition temperature=

The glass-transition temperature of the water-insoluble polymer is preferably -50°C or higher, more preferably -20°C or higher, and even more preferably -15°C or higher, and is preferably 20°C or lower, more preferably 5°C or lower, and even more preferably -5°C or lower. When the glass-transition temperature of the water-insoluble polymer is within any of the specific ranges set forth above, electrolyte solution mobility of the non-aqueous secondary battery and heat shrinkage resistance of the separator can be further improved.

=Degree of swelling in electrolyte solution=

The degree of swelling in electrolyte solution of the water-insoluble polymer is preferably a factor of 1.2 or more, more preferably a factor of 2 or more, and even more preferably a factor of 4.5 or more, and is preferably a factor of 15 or less, more preferably a factor of 10 or less, and even more preferably a factor of 7 or less. When the degree of swelling in electrolyte solution of the water-insoluble polymer is within any of the specific ranges set forth above, electrolyte solution mobility of the non-aqueous secondary battery and heat shrinkage resistance of the separator can be further improved.

=Content of water-insoluble polymer=

The content of the water-insoluble polymer in the porous membrane is preferably 0.5 parts by mass or more, more preferably 1.0 parts by mass or more, and even more preferably 1.5 parts by mass or more per 100 parts by mass of the non-conductive particles, and is preferably 15 parts by mass or less, more preferably 10 parts by mass or less, and even more preferably 8 parts by mass or less per 100 parts by mass of the non-conductive particles. When the content of the water-insoluble polymer in the porous membrane is within any of the specific ranges set forth above, electrolyte solution mobility of the non-aqueous secondary battery and heat shrinkage resistance of the separator can be further improved.

-Water-soluble polymer-

A water-soluble polymer may be used as the polymer B in the porous membrane. Examples of water-soluble polymers that can be used include, but are not specifically limited to, a first water-soluble polymer that can function as a dispersant, a second water-soluble polymer that can function as a viscosity modifier (thickener), and a third water-soluble polymer that can function as a wetting agent. One of these water-soluble polymers may be used individually, or two or more of these water-soluble polymers may be used in combination in a freely selected ratio.

=First water-soluble polymer (dispersant)=

A polymer that includes a carboxy group-containing monomer unit and a sulfo group-containing monomer unit (carboxy/sulfo-containing polymer) or a salt of poly(meth)acrylic acid such as ammonium polyacrylate, for example, can be used as the first water-soluble polymer. Carboxy/sulfo-containing polymers and poly(meth)acrylic acid salts can function well as dispersants. One of these water-soluble polymers that function as dispersants may be used individually, or two or more of these water-soluble polymers that function as dispersants may be used in a freely selected ratio.

The content of the first water-soluble polymer in the porous membrane can be set as not less than 0.01 parts by mass and not more than 5 parts by mass relative to 100 parts by mass of the non-conductive particles, for example.

=Second water-soluble polymer (viscosity modifier)=

A cellulose-based polymer, a poly(meth)acrylic acid-based polymer, or a nitrogen-based polymer, for example, can be used as the second water-soluble polymer. Cellulose-based polymers, poly(meth)acrylic acid-based polymers, and nitrogen-based polymers can function well as viscosity modifiers. One of these water-soluble polymers that function as viscosity modifiers (thickeners) may be used individually, or two or more of these water-soluble polymers that function as viscosity modifiers (thickeners) may be used in a freely selected ratio.

Carboxymethyl cellulose or the like can be used as the cellulose-based polymer, for example.

The poly(meth)acrylic acid-based polymer is a water-soluble polymer comprising not less than 20 mass% and not more than 90 mass% of (meth)acrylic acid units. Note that the polyacrylic acid-based polymer may include a (meth)acrylic acid ester monomer unit, a cross-linkable monomer unit, and the like, for example, as monomer units other than a (meth)acrylic acid unit in an amount that is within a range enabling the polymer to function as a viscosity modifier. Examples of monomers that can form a (meth)acrylic acid ester monomer unit and a cross-linkable monomer unit include the monomers that were previously described in the "Water-insoluble polymer" section.

The poly(meth)acrylic acid-based polymer can be produced by polymerizing a composition containing the above-described monomers such as (meth)acrylic acid by a known method in an aqueous solvent such as water, for example.

The nitrogen-based polymer is a water-soluble polymer that includes a nitrogen-containing monomer unit. Examples of nitrogen-containing monomers that can form a nitrogen-containing monomer unit include acrylamide, methacrylamide, and N-hydroxyethylacrylamide. The proportional content of nitrogen-containing monomer units in the nitrogen-based polymer can be not less than 50 mass% and not more than 100 mass%, for example. The nitrogen-based polymer may include a (meth)acrylic acid unit or the like, for example, as a monomer unit other than a nitrogen-containing monomer unit in an amount within a range that enables the polymer to function as a viscosity modifier.

The nitrogen-based polymer can be produced by polymerizing a composition containing the above-described monomers such as a nitrogen-containing monomer by a known method in an aqueous solvent such as water, for example.

The weight-average molecular weight of the nitrogen-based polymer is not specifically limited, but is preferably 50,000 or more, more preferably 80,000 or more, and even more preferably 100,000 or more, and is preferably 600,000 or less, more preferably 500,000 or less, even more preferably 400,000 or less, and further preferably 290,000 or less, for example.

In a case in which the polymer B in the porous membrane only includes a water-soluble polymer and does not include a water-insoluble polymer, the water-soluble polymer serving as the polymer B preferably includes at least a nitrogen-based polymer. Even in a case in which the polymer B in the porous membrane does not include a water-insoluble polymer, sufficiently high electrolyte solution mobility of the non-aqueous secondary battery and heat shrinkage resistance of the separator can be ensured through the polymer B including a nitrogen-based polymer as a water-soluble polymer.

The content of the second water-soluble polymer in the porous membrane can be set as not less than 0.5 parts by mass and not more than 5 parts by mass relative to 100 parts by mass of the non-conductive particles, for example, and is preferably 3 parts by mass or more.

=Third water-soluble polymer (wetting agent)=

A polyether-based polymer such as a polyethylene oxide-ethylene oxide copolymer, for example, can be used as the third water-soluble polymer. Polyether-based polymers function well as wetting agents. The content of the third water-soluble polymer in the porous membrane can be set as not less than 0.1 parts by mass and not more than 5 parts by mass relative to 100 parts by mass of the non-conductive particles, for example.

<<Production method of separator>>

The separator that is included in the presently disclosed non-aqueous secondary battery can be produced by forming the porous membrane on the separator substrate.

The separator included in the presently disclosed non-aqueous secondary battery may be produced through a step of applying a slurry composition for a porous membrane containing the above-described non-conductive particles and polymer B onto the separator substrate (application step) and a step of drying the slurry composition for a porous membrane that has been applied onto the separator substrate (drying step), for example, but is not specifically limited to being produced in this manner.

The slurry composition for a porous membrane is a composition in the form of a slurry having water or the like as a dispersion medium that can further contain other components in addition to the above-described non-conductive particles and polymer B.

The slurry composition for a porous membrane can be produced by, for example, dissolving or dispersing the above-described non-conductive particles, polymer B, and other optional components in a solvent such as water and/or an organic solvent. Specifically, the slurry composition for a porous membrane can be produced by mixing the components and the solvent using a mixer such as a ball mill, a sand mill, a bead mill, a pigment disperser, a grinding machine, an ultrasonic disperser, a homogenizer, a planetary mixer, or a FILMIX.

Note that a solvent used in production of the above-described polymer B may be used as the solvent that is used in production of the slurry composition for a porous membrane.

{Application step}

The slurry composition for a porous membrane can be applied onto the separator substrate by any commonly known method without any specific limitations. Specific examples of application methods that can be used include doctor blading, dip coating, reverse roll coating, direct roll coating, gravure coating, extrusion coating, and brush coating. Note that the thickness of the slurry composition for a porous membrane on the separator substrate after application but before drying can be set as appropriate in accordance with the thickness of the porous membrane to obtained after drying.

{Drying step}

The slurry composition for a porous membrane on the separator substrate can be dried by any commonly known method without any specific limitations. Examples of drying methods that can be used include drying by warm, hot, or low-humidity air; drying in a vacuum; and drying by irradiation with infrared light, electron beams, or the like. By drying the slurry composition for a porous membrane on the substrate in this manner, it is possible to obtain a separator (porous membrane-equipped separator) having a porous membrane formed on the separator substrate.

<Thickness of porous membrane>

The thickness of the porous membrane formed on the substrate is preferably 0.01 $\mu$m or more, more preferably 0.1 $\mu$m or more, and even more preferably 1 $\mu$m or more, and is preferably 20 $\mu$m or less, more preferably 10 $\mu$m or less, and even more preferably 5 $\mu$m or less. Strength of the porous membrane can be sufficiently ensured through a porous membrane thickness of 0.01 $\mu$m or more, whereas sufficiently high electrolyte solution mobility of the non-aqueous secondary battery can be ensured through a porous membrane thickness of 20 $\mu$m or less.

<Production method of non-aqueous secondary battery>

The presently disclosed non-aqueous secondary battery can be produced by, for example, stacking the above-described positive electrode and negative electrode with the separator in-between, performing rolling, folding, or the like of the resultant laminate, as necessary, to place the laminate in a battery container, injecting the electrolyte solution into the battery container, and sealing the battery container. From a viewpoint of further improving electrolyte solution mobility of the non-aqueous secondary battery, it is preferable that a surface at the porous membrane-side of the separator faces the positive electrode such that the porous membrane and the positive electrode mixed material layer are in contact. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

In the examples and comparative examples, the following methods were used to measure and evaluate iodine value, weight-average molecular weight, proportion of structural units resulting from polymerization of butadiene by 1,2-bonding, volume-average particle diameter, glass-transition temperature, degree of swelling in electrolyte solution, mass per unit area, density, void fraction, and also injectability, cell windability, cycle characteristics, rate characteristics, and high-potential rate characteristics of a lithium ion secondary battery, and heat shrinkage resistance of a separator.

<Iodine value of polymer>

The iodine value of a polymer was measured in accordance with JIS K6235(2006).

<Weight-average molecular weight>

A polymer was dissolved in LiBr-dimethylformamide (DMF) solution of 10 mM in concentration such as to have a solid content concentration of 0.1 wt% and was then subjected to gel permeation chromatography (GPC) under the following measurement conditions to measure the weight-average molecular weight (Mw).

<<Measurement conditions>>

Apparatus: HLC-8320GPC (product name) produced by Tosoh Corporation
Column: TSKgel α-M (product name) × 2 columns (7.8 mm I.D. × 30 cm × 2 columns) produced by Tosoh Corporation
Eluent: N,N-dimethylformamide (containing lithium bromide in concentration of 10 mM)
Flow rate: 1 mL/min
Injection volume: 10 μL
Column temperature: 40°C
Detector: Differential refractive index detector (RI)
Standard substance: Standard polystyrene kit (produced by Tosoh Corporation; product name: PSt Quick Kit-H)

<Proportional content of structural units derived from 1,3-butadiene polymerized by 1,2-bonding>

A polymer A was vacuum dried at 60°C for 24 hours and was then subjected to $^1$H-NMR measurement to determine the proportion constituted by structural units derived from 1,3-butadiene polymerized by 1,2-bonding among all repeating units of the polymer.

<Volume-average particle diameter>

The volume-average particle diameter of a particulate polymer was measured by laser diffraction/scattering. Specifically, a water dispersion (adjusted to solid content concentration of 0.1 mass%) containing a measurement subject (particulate polymer) was taken to be a sample. In a particle diameter distribution (by volume) measured using a laser diffraction/scattering particle size analyzer (produced by Beckman Coulter, Inc.; product name: LS-13 320), the particle diameter D50 at which cumulative volume calculated from a small diameter end of the distribution reached 50% was taken to be the volume-average particle diameter.

<Glass-transition temperature of polymer>

A powdered sample obtained by drying a water dispersion containing a polymer at a temperature of 25°C for 48 hours was taken to be a measurement sample. The measurement sample was weighed into an aluminum pan in an amount of 10 mg and was then measured by a differential scanning calorimeter (produced by SII NanoTechnology Inc.; product name: EXSTAR DSC6220) under conditions prescribed in JIS Z8703 with a measurement temperature range of -100°C to 200°C and a heating rate of 20°C/min to obtain a differential scanning calorimetry (DSC) curve. Note that an empty aluminum pan was used as a reference. In the heating process, the temperature at which a derivative signal (DDSC) exhibited a peak was determined as the glass-transition temperature (°C). Note that since multiple peaks were measured, the temperature at which a peak of large displacement was exhibited was taken to be the glass-transition temperature of the polymer.

<Degree of swelling in electrolyte solution>

A water dispersion containing a particulate polymer was dried at 25°C and was subsequently vacuum dried at 60°C for 12 hours to obtain a test specimen for measurement of the degree of swelling in electrolyte solution of the particulate polymer. The mass of this test specimen (pre-immersion mass) was measured. Thereafter, the test specimen was immersed in electrolyte solution at a temperature of 60°C for 72 hours. The immersed test specimen was then pulled up, electrolyte solution was wiped off, and the mass of the test specimen (post-immersion mass) was measured soon thereafter. A value of (post-immersion mass)/(pre-immersion mass) [factor] was taken to be the degree of swelling.

Note that a $LiPF_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was used as the electrolyte solution.

<Mass per unit area M (mg/cm$^2$)>

A positive electrode was punched out with a specific area (S (cm$^2$)), and the weight W (mg) thereof was measured. In the same manner, aluminum foil serving as a current collector was punched out with a specific area (S (cm$^2$)), and the weight W0 (mg) thereof was measured. The mass per unit area was then calculated by the following formula.

$$M = (W - W0)/S \ (mg/cm^2)$$

<Density d (g/cm$^3$)>

The thickness t (cm) of a positive electrode obtained through roll pressing of a positive electrode web was measured. The density d (g/cm$^3$) was calculated by the following formula from the measured thickness using the thickness t0 (cm) of aluminum foil serving as a current collector and the calculated mass per unit area M (mg/cm$^2$).

$$d = (M/1000)/(t - t0) \ (g/cm^3)$$

<Void fraction>

A positive electrode cut out with a specific area was measured in accordance with JIS R 1655, and the cumulative pore volume Vp was calculated as the void volume in the positive electrode mixed material layer. The thickness and area of the positive electrode mixed material layer were multiplied to determine the apparent volume Va of the positive electrode mixed material layer, and then a value calculated based on the following formula was taken to be the void fraction $\varphi$ of the positive electrode mixed material layer.

$$\varphi = Vp/Va \times 100(\%)$$

<Injectability>

A positive electrode, a negative electrode, and a porous membrane-equipped separator produced in each example or comparative example were respectively cut out as 6.5 cm × 13.0 cm, 7.0 cm × 13.5 cm, and 7.5 cm × 14.0 cm. Next, stacking was performed in an order of positive electrode/porous membrane-equipped separator/negative electrode with the porous membrane of the separator facing the positive electrode-side. The resultant laminate was housed in an aluminum laminate sheet casing of 9.0 cm × 18.0 cm. Thereafter, 500 μL of electrolyte solution was injected so as to produce a lithium ion secondary battery. Note that a $LiPF_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was used as the electrolyte solution. The inside of the produced lithium ion secondary battery was depressurized to -95 kPa, this state was maintained for 1 minute, and then heat sealing was performed to obtain a test sample. This test sample was disassembled 5 minutes later, and the impregnation state of electrolyte solution in the positive electrode was visually checked. An evaluation was made by the following standard. A greater portion impregnated with electrolyte solution in the positive electrode indicates higher electrolyte solution injectability. Moreover, higher electrolyte solution injectability indicates that a lithium ion secondary battery has better electrolyte solution mobility.

A: Entire surface of positive electrode impregnated with electrolyte solution
B: Portion of less than 4 cm$^2$ remains unimpregnated with electrolyte solution in positive electrode (excluding case in which entire surface is impregnated)

C: Portion of not less than 4 cm$^2$ and less than 8 cm$^2$ remains unimpregnated with electrolyte solution in positive electrode

D: Portion of 8 cm$^2$ or more remains unimpregnated with electrolyte solution in positive electrode

<Cell windability>

A positive electrode, a negative electrode, and a porous membrane-equipped separator produced in each example or comparative example were respectively cut out as 6.5 cm $\times$ 13.0 cm, 7.0 cm $\times$ 13.5 cm, and 7.5 cm $\times$ 14.0 cm. Next, stacking was performed in an order of positive electrode/separator/negative electrode with the porous membrane of the separator facing the positive electrode-side. This laminate was wound around rods of different diameters, and the occurrence or absence of cracking of the positive electrode mixed material layer or the porous membrane was evaluated. When winding can be performed with respect to a rod of smaller diameter without cracking of the positive electrode mixed material layer or porous membrane, this indicates that a cell of a lithium ion secondary battery has higher flexibility and better windability. Cell windability was evaluated by the following standard in accordance with the diameter of a thinnest rod with which cracking of the positive electrode mixed material layer or porous membrane did not occur.

A: No cracking even upon winding around rod of 1.15 mm in diameter
B: No cracking even upon winding around rod of 1.40 mm in diameter
C: No cracking even upon winding around rod of 2.00 mm in diameter
D: No cracking even upon winding around rod of 3.00 mm in diameter

<Cycle characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V (cell voltage of 3.40 V in Example 7) by a 0.2C constant-current method at a temperature of 25°C and was then subjected to 12 hours of aging at a temperature of 60°C. The lithium ion secondary battery was then discharged to a cell voltage of 3.00 V by a 0.2C constant-current method at a temperature of 25°C. Thereafter, CC-CV charging (upper limit cell voltage of 4.20 V with exception of Example 6 (upper limit cell voltage of 4.35 V) and Example 7 (upper limit cell voltage of 3.60 V)) was performed by a 0.2C constant-current method and CC discharging was performed to 3.00 V by a 0.2C constant-current method. This charging and discharging at 0.2C was repeated three times.
The lithium ion secondary battery was subsequently subjected to 100 cycles of a charge/discharge operation with a cell voltage of 4.20 V to 3.00 V and a charge/discharge rate of 1.0C (performed with cell voltage of 4.35 V to 3.00 V at 1.0C in Example 6 and with cell voltage of 3.60 V to 3.00 V at 1.0C in Example 7) in an environment having a temperature of 25°C. The discharge capacity of the 1st cycle was defined as X1 and the discharge capacity of the 100th cycle was defined as X2. A capacity maintenance rate expressed by $\Delta C = (X2/X1) \times 100(\%)$ was determined using the discharge capacity X1 and the discharge capacity X2 and was then evaluated by the following standard. A larger value for the capacity maintenance rate $\Delta C$ indicates that a lithium ion secondary battery has better cycle characteristics.

A: Capacity maintenance rate $\Delta C$ of 93% or more
B: Capacity maintenance rate $\Delta C$ of not less than 90% and less than 93%
C: Capacity maintenance rate $\Delta C$ of not less than 87% and less than 90%
D: Capacity maintenance rate $\Delta C$ of less than 87%

<Low-temperature rate characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V (cell voltage of 3.40 V in Example 7) by a 0.2C constant-current method at a temperature of 25°C and was then subjected to 12 hours of aging at a temperature of 60°C. The lithium ion secondary battery was then discharged to a cell voltage of 3.00 V by a 0.2C constant-current method at a temperature of 25°C. Thereafter, CC-CV charging (upper limit cell voltage of 4.20 V with exception of Example 6 (upper limit cell voltage of 4.35 V) and Example 7 (upper limit cell voltage of 3.60 V)) was performed with a 0.2C constant current, and then CC discharging was performed to a cell voltage of 3.00 V with a 0.2C constant current. This charging and discharging at 0.2C was repeated three times.
Next, 0.2C constant-current charging and discharging was performed between cell voltages of 4.2 V and 3.00 V (between cell voltages of 4.35 V and 3.00 V in Example 6 and between cell voltages of 3.60 V and 3.00 V in Example 7) in an environment having a temperature of 25°C, and the discharge capacity at this time was defined as C0. Thereafter, CC-CV charging was performed in the same manner with a 0.2C constant current, discharging was then performed to 3.0 V with a 0.5C constant current in an environment having a temperature of -10°C, and the discharge capacity at this time was defined as C1. A capacity maintenance rate expressed by $\Delta C = (C1/C0) \times 100(\%)$ was determined as a rate characteristic and was evaluated by the following standard. A larger value for the capacity maintenance rate $\Delta C$ indicates higher discharge capacity at high current in a low temperature environment and lower internal resistance.

A: Capacity maintenance rate $\Delta C$ of 70% or more

B: Capacity maintenance rate $\Delta C$ of not less than 60% and less than 70%

C: Capacity maintenance rate $\Delta C$ of not less than 50% and less than 60%

D: Capacity maintenance rate $\Delta C$ of less than 50%

<High-potential rate characteristics>

A lithium ion secondary battery produced in each example or comparative example was left at rest at a temperature of 25°C for 5 hours after injection of electrolyte solution. Next, the lithium ion secondary battery was charged to a cell voltage of 3.65 V (cell voltage of 3.40 V in Example 7) by a 0.2C constant-current method at a temperature of 25°C and was then subjected to 12 hours of aging at a temperature of 60°C. The lithium ion secondary battery was then discharged to a cell voltage of 3.00 V by a 0.2C constant-current method at a temperature of 25°C. Thereafter, CC-CV charging (upper limit cell voltage of 4.20 V with exception of Example 6 (upper limit cell voltage of 4.35 V) and Example 7 (upper limit cell voltage of 3.60 V)) was performed with a 0.2C constant current, and then CC discharging was performed to a cell voltage of 3.00 V with a 0.2C constant current. This charging and discharging at 0.2C was repeated three times.
Next, 0.2C constant-current charging and discharging was performed between cell voltages of 4.35 V and 3.00 V (between cell voltages of 4.55 V and 3.00 V in Example 6 and between cell voltages of 3.60 V and 3.00 V in Example 7) in an environment having a temperature of 25°C, and the discharge capacity at this time was defined as C0. Thereafter, CC-CV charging was performed in the same manner with a 0.2C constant current, discharging was then performed to 3.0 V with a 2.0C constant current in an environment having a temperature of 25°C, and the discharge capacity at this time was defined as C1. A capacity maintenance rate expressed by $\Delta C = (C1/C0) \times 100(\%)$ was determined as a high-potential rate characteristic and was evaluated by the following standard. A larger value for the capacity maintenance rate $\Delta C$ indicates higher discharge capacity at high current and lower internal resistance.

A: Capacity maintenance rate $\Delta C$ of 80% or more

B: Capacity maintenance rate $\Delta C$ of not less than 70% and less than 80%

C: Capacity maintenance rate $\Delta C$ of not less than 60% and less than 70%

D: Capacity maintenance rate $\Delta C$ of less than 60%

<Heat shrinkage resistance of separator in electrolyte solution>

A porous membrane-equipped separator produced in each example or comparative example was cut out as a square of 6 cm in width by 6 cm in length, and then a square having a side length of 5 cm was drawn in an inner part of this cut-out square. In addition, a produced positive electrode was cut out as 5 cm × 5 cm, was then stacked with the porous membrane-equipped separator, and was housed inside an aluminum laminate sheet casing of 9.0 cm × 9.0 cm. Thereafter, 400 μL of electrolyte solution was injected, the internal pressure was lowered to -95 kPa, this state was maintained for 1 minute, and then heat sealing was performed to obtain a test sample. Note that a LiPF$_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) was used as the electrolyte solution. The test sample was placed in a 130°C oil bath and was left therein for 1 hour. The area change of the square drawn in the inner part was subsequently calculated (= {(area of square before being left - area of square after being left)/area of square before being left} × 100%) as a heat shrinkage rate and was evaluated by the following standard. A smaller heat shrinkage rate indicates that a separator has better heat shrinkage resistance in electrolyte solution.

A: Heat shrinkage rate of less than 10%

B: Heat shrinkage rate of not less than 10% and less than 18%
C: Heat shrinkage rate of not less than 18% and less than 27%
D: Heat shrinkage rate of 27% or more

(Production Example 1-1: Production of polymer A1)

A reactor having an internal capacity of 10 L was charged with 100 parts of deionized water, 35 parts of acrylonitrile as a (meth)acrylonitrile monomer, and 65 parts of 1,3-butadiene as an aliphatic conjugated diene monomer, and then 2 parts of potassium oleate as an emulsifier, 0.1 parts of potassium phosphate as a stabilizer, and 0.8 parts of tert-dodecyl mercaptan (TDM) as a molecular weight modifier were added. Emulsion polymerization was performed at a temperature of 5°C in the presence of 0.35 parts of potassium persulfate as a polymerization initiator to cause copolymerization of acrylonitrile and 1,3-butadiene.
At the point at which the polymerization conversion rate reached 85%, 0.2 parts of hydroxylamine sulfate was added per 100 parts of monomer to stop polymerization. Next, heating was performed and then steam distillation was performed at approximately 90°C under reduced pressure to collect residual monomer. Thereafter, 0.1 parts of dibutylhydroxytoluene (BHT) as a substituted phenol was added to yield a water dispersion of a copolymer of acrylonitrile and 1,3-butadiene that was a precursor of a polymer A1.
A 25 mass% aqueous solution of calcium chloride ($CaCl_2$) was added as a coagulant under stirring in an amount such as to be 3 parts relative to 100 parts of polymer solid content in the obtained water dispersion so as to cause coagulation of the polymer in the water dispersion. Thereafter, filtration was performed, and then 50 equivalents of deionized water was passed through the obtained polymer to perform water washing. The polymer was subsequently dried under reduced pressure at a temperature of 90°C to obtain a precursor of a polymer A1.
Next, the precursor of the polymer A1 was hydrogenated by adopting an oil-layer hydrogenation method as the hydrogenation method. The precursor of the polymer A1 was dissolved in acetone such as to have a concentration of 12% and thereby obtain an acetone solution of the precursor of the polymer A1 as a hydrogenation subject. This acetone solution was loaded into an autoclave, 500 ppm of palladium/silica ($Pd/SiO_2$) as a catalyst was added relative to 100% of the precursor of the polymer A1 serving as a hydrogenation subject, and a hydrogenation reaction was subsequently performed at a hydrogen pressure of 3.0 MPa and a temperature of 60°C for 6 hours to yield a hydrogenation reaction product. Once the hydrogenation reaction had ended, the palladium/silica was filtered off, and acetone serving as a solvent was removed under reduced pressure to obtain a polymer. The obtained polymer A1 was dissolved in a specific amount of N-methylpyrrolidone (NMP) to obtain an NMP solution of the polymer A1 having a solid content concentration of 8%.
The obtained polymer A1 was used to measure the iodine value, weight-average molecular weight, and proportion of structural units resulting from polymerization of 1,3-butadiene by 1,2-bonding. The results are shown in Table 1.

(Production Example 1-2: Production of polymer A2)

A reactor having an internal capacity of 10 L was charged with 100 parts of deionized water, 35 parts of acrylonitrile as a (meth)acrylonitrile monomer, and 65 parts of 1,3-butadiene as an aliphatic conjugated diene monomer, and then 2 parts of potassium oleate as an emulsifier, 0.1 parts of potassium phosphate as a stabilizer, and 0.25 parts of tert-dodecyl mercaptan (TDM) as a molecular weight modifier were added. Emulsion polymerization was performed at a temperature of 5°C in the presence of 0.35 parts of potassium persulfate as a polymerization initiator to cause copolymerization of acrylonitrile and 1,3-butadiene.
At the point at which the polymerization conversion rate reached 95%, 0.2 parts of hydroxylamine sulfate was added per 100 parts of monomer to stop polymerization. Next, heating was performed and then steam distillation was performed at approximately 90°C under reduced pressure to collect residual monomer. Thereafter, 0.1 parts of dibutylhydroxytoluene (BHT) as a substituted phenol was added to yield a water dispersion of a copolymer of acrylonitrile and 1,3-butadiene that was a precursor of a polymer A2.
A 25 mass% aqueous solution of calcium chloride ($CaCl_2$) was added as a coagulant under stirring in an amount such as to be 3 parts relative to 100 parts of polymer solid content in the obtained water dispersion so as to cause coagulation of the polymer in the water dispersion. Thereafter, filtration was performed, and then 50 equivalents of deionized water was passed through the obtained polymer to perform water washing. The polymer was subsequently dried under reduced pressure at a temperature of 90°C to obtain a precursor of a polymer A2.
Next, the precursor of the polymer A2 was hydrogenated by adopting an oil-layer hydrogenation method as the hydrogenation method. The precursor of the polymer A2 was dissolved in acetone such as to have a concentration of 12% and thereby obtain an acetone solution of the precursor of the polymer A2 as a hydrogenation subject. This acetone solution was loaded into an autoclave, 500 ppm of palladium/silica ($Pd/SiO_2$) as a catalyst was added relative to 100% of the precursor of the polymer A2 serving as a hydrogenation subject, and a hydrogenation reaction was subsequently performed at a hydrogen pressure of 3.0 MPa and a temperature of 60°C for 6 hours to yield a hydrogenation reaction product. Once the hydrogenation reaction had ended, the palladium/silica was filtered off, and acetone serving as a solvent was removed under reduced pressure to obtain a polymer. The obtained polymer A2 was dissolved in a specific amount of NMP to obtain an NMP solution of the polymer A2 having a solid content concentration of 8%.

The obtained polymer A2 was used to measure the iodine value, weight-average molecular weight, and proportion of structural units resulting from polymerization of 1,3-butadiene by 1,2-bonding. The results are shown in Table 1.

(Production Example 2-1: Production of water dispersion containing polymer B1)

A reactor including a stirrer was supplied with 90 parts of deionized water, 0.25 parts of sodium dodecylbenzenesulfonate (NEOPELEX G-15 produced by Kao Corporation) as an emulsifier, and 0.23 parts of ammonium persulfate. The gas phase was purged with nitrogen gas, and the temperature was raised to 70°C.

Meanwhile, a monomer composition was obtained in a separate vessel by mixing 50 parts of deionized water, 0.8 parts of sodium dodecylbenzenesulfonate as an emulsifier, 80.0 parts of n-butyl acrylate (BA) as a (meth)acrylic acid ester monomer unit, 12.5 parts of acrylonitrile (AN) as a nitrile group-containing monomer, 2.0 parts of methacrylic acid (MAA) as an acid group-containing monomer unit, 4 parts of N-methylolacrylamide (NMA) as a hydroxyl group-containing monomer, and 1.5 parts of acrylamide (AAm) as an amide group-containing monomer unit. This monomer composition was continuously added into the reactor over 4 hours to perform polymerization. The reaction was carried out at 70°C during the addition. Once the addition was complete, the temperature was raised to 80°C, a further 3 hours of stirring was performed, and then the reaction was ended to yield a water dispersion containing a polymer B1. The polymer B1 was water-insoluble and had a particulate form in water. The obtained particulate polymer B1 had a glass-transition temperature of -12°C, a volume-average particle diameter of 140 nm, and a degree of swelling in electrolyte solution of a factor of 5.5.

(Production Example 2-2: Production of water dispersion containing polymer B2)

A reactor including a stirrer was supplied with 70 parts of deionized water, 0.15 parts of sodium lauryl sulfate (produced by Kao Corporation; product name: EMAL® 2F (EMAL is a registered trademark in Japan, other countries, or both)) as an emulsifier, and 0.5 parts of ammonium persulfate. The gas phase was purged with nitrogen gas, and the temperature was raised to 60°C.

Meanwhile, a monomer composition was obtained in a separate vessel by mixing 50 parts of deionized water, 0.5 parts of sodium dodecylbenzenesulfonate, 93.3 parts of n-butyl acrylate as a (meth)acrylic acid ester monomer, 2.0 parts of acrylonitrile as a nitrile group-containing monomer, 2 parts of methacrylic acid as an acid group-containing monomer, 1.2 parts of N-methylolacrylamide as a hydroxyl group-containing monomer, and 1.5 parts of allyl glycidyl ether as an epoxy group-containing monomer. This monomer composition was continuously added into the reactor over 4 hours to perform polymerization. The reaction was carried out at 60°C during the addition. Once the addition was complete, a further 3 hours of stirring was performed at 70°C, and then the reaction was ended to yield a water dispersion containing a polymer B2. The polymer B2 was water-insoluble and had a particulate form in water. The obtained particulate polymer B2 had a glass-transition temperature of -39°C, a volume-average particle diameter of 350 nm, and a degree of swelling in electrolyte solution of a factor of 3.8.

(Production Example 2-3: Production of water dispersion containing polymer B3)

A reactor including a stirrer was charged with 70 parts of deionized water, 0.15 parts of sodium lauryl sulfate (produced by Kao Corporation; product name: EMAL® 2F) as an emulsifier, and 0.5 parts of ammonium persulfate. The gas phase was purged with nitrogen gas, and the temperature was raised to 70°C.

Meanwhile, a monomer composition was obtained in a separate vessel by mixing 50 parts of deionized water, 0.5 parts of sodium dodecylbenzenesulfonate, 92.8 parts of n-butyl acrylate as a (meth)acrylic acid ester monomer, 2.0 parts of acrylonitrile as a nitrile group-containing monomer, 2 parts of methacrylic acid as an acid group-containing monomer, 1.6 parts of N-methylolacrylamide as a hydroxyl group-containing monomer, and 1.6 parts of acrylamide as an amide group-containing monomer. This monomer composition was continuously added into the reactor over 4 hours to perform polymerization. The reaction was carried out at 70°C during the addition. Once the addition was complete, a further 3 hours of stirring was performed at 75°C, and then the reaction was ended to yield a water dispersion containing a polymer B3. The polymer B3 was water-insoluble and had a particulate form in water. The obtained particulate polymer B3 had a glass-transition temperature of -40°C, a volume-average particle diameter of 400 nm, and a degree of swelling in electrolyte solution of a factor of 4.0.

(Production Example 2-4: Production of water dispersion containing polymer B4)

A reactor including a stirrer was supplied with 70 parts of deionized water, 0.1 parts of sodium dodecylbenzenesulfonate as an emulsifier, and 0.5 parts of ammonium persulfate. The gas phase was purged with nitrogen gas, and the temperature was raised to 75°C.

Meanwhile, a monomer composition was obtained in a separate vessel by mixing 50 parts of deionized water, 0.9 parts of sodium dodecylbenzenesulfonate as a dispersant, 66.1 parts of 2-ethylhexyl acrylate (2EHA) as a (meth)acrylic acid ester monomer, 4.0 parts of acrylic acid (AA) as an acid group-containing monomer, 1.7 parts of allyl glycidyl ether as an epoxy group-containing monomer, 28 parts of styrene (ST) as an aromatic-containing monomer, and 0.2 parts of allyl methacrylate (AMA) as a cross-linkable monomer. This monomer composition was continuously added into the reactor over 4 hours to perform polymerization. The reaction was carried out at 75°C during the addition. Once the addition was complete, a further 3 hours of stirring was performed at 80°C, and then the reaction was ended to yield a water dispersion containing a polymer B4. The polymer B4 was water-insoluble and had a particulate form in water. The obtained particulate polymer B4 had a glass-transition temperature of -25°C, a volume-average particle diameter of 310 nm, and a degree of swelling in electrolyte solution of a factor of 1.5.

(Production Example 2-5: Production of water dispersion containing polymer B5)

A reactor including a stirrer was supplied with 90 parts of deionized water, 0.25 parts of sodium dodecylbenzenesulfonate (NEOPELEX G-15 produced by Kao Corporation) as an emulsifier, and 0.23 parts of ammonium persulfate. The gas phase was purged with nitrogen gas, and the temperature was raised to 70°C.

Meanwhile, a monomer composition was obtained in a separate vessel by mixing 50 parts of deionized water, 0.8 parts of sodium dodecylbenzenesulfonate as an emulsifier, 66.0 parts of n-butyl acrylate (BA) as a (meth)acrylic acid ester monomer, 10.0 parts of acrylonitrile (AN) as a nitrile group-containing monomer, 2.0 parts of methacrylic acid (MAA) as an acid group-containing monomer, 2.0 parts of N-methylolacrylamide (NMA) as a hydroxyl group-containing monomer, and 20.0 parts of glycidyl methacrylate (GMA) as an epoxy group-containing monomer. This monomer composition was continuously added into the reactor over 4 hours to perform polymerization. The reaction was carried out at 70°C during the addition. Once the addition was complete, the temperature was raised to 80°C, a further 3 hours of stirring was performed, and then the reaction was ended to produce a water dispersion containing a polymer B5. The polymer B5 was water-insoluble and had a particulate form in water. The obtained particulate polymer B5 had a glass-transition temperature of 0°C, a volume-average particle diameter of 140 nm, and a degree of swelling in electrolyte solution of a factor of 3.2.

(Production Example 2-6: Production of water dispersion containing polymer B6)

An aqueous solution containing a water-soluble polymer B6 was produced. A 5 MPa pressure-resistant vessel equipped with a stirrer was charged with 57 parts of ethyl acrylate and 12.2 parts of butyl acrylate as (meth)acrylic acid ester monomers, 30 parts of methacrylic acid as an acid group-containing monomer, 0.8 parts of ethylene glycol dimethacrylate as a cross-linkable monomer, 1.0 parts of ammonium polyoxyalkylene alkenyl ether sulfate, 150 parts of deionized water, and 0.5 parts of potassium persulfate as a polymerization initiator. These materials were thoroughly stirred, and then the inside of the vessel was heated to 70°C to initiate polymerization. At the point at which the polymerization conversion rate reached 96%, cooling was performed to quench the reaction to yield a water dispersion containing a polymer B6.

Next, the water dispersion containing the polymer B6 and 5 mass% sodium hydroxide aqueous solution were added into a vessel including a stirrer that had been charged with deionized water in a formulation adjusted such that the pH of the resultant solution was 8 and the concentration of the polymer B6 in the resultant solution was 1 mass%, and these materials were thoroughly stirred to dissolve the polymer B6 and obtain an aqueous solution containing the water-soluble polymer B6.

(Production Example 2-7: Production of aqueous solution containing polymer B7)

A 10 L flask equipped with a septum was charged with 6,335 g of deionized water and 285 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 939.8 g (74.0%) of acrylamide and 203.2 g (16.0%) of N-hydroxyethylacrylamide as nitrogen-containing monomers and 127.0 g (10.0%) of acrylic acid as an acid group-containing monomer were mixed and were injected into the flask using a syringe. Thereafter, 300 g of a 5.0% aqueous solution of ammonium persulfate as a polymerization initiator was added into the flask using a syringe, and the reaction temperature was set to 60°C. After 2 hours, 150 g of a 5.0% aqueous solution of ammonium persulfate as a polymerization initiator and 142.5 g of a 2.0% aqueous solution of L-ascorbic acid as a polymerization accelerator were added in order to further raise the reaction conversion rate. After a further 2 hours, 150 g of a 5.0% aqueous solution of ammonium persulfate as a polymerization initiator and 142.5 g of a 2.0% aqueous solution of L-ascorbic acid as a polymerization accelerator were added. After 2 hours, 34 g of a 5% aqueous solution of sodium nitrite as a reaction inhibitor was added into the flask and stirred. Thereafter, the flask was cooled to 40°C, was converted to an air atmosphere, and the pH of the system was adjusted to 8.0 using 8% lithium hydroxide aqueous solution to produce an aqueous solution containing a water-soluble polymer B7. The water-soluble polymer B7 had a weight-average molecular weight (Mw) of 290,000.

(Production Example 3: Production of water dispersion containing non-conductive organic particles (particulate polymer))

A reactor A including a stirrer was charged with 0.1 parts of sodium dodecylbenzenesulfonate, 0.3 parts of ammonium persulfate, and 100 parts of deionized water. These materials were mixed to obtain a mixture and were heated to 80°C. Meanwhile, a monomer composition for seed particles was produced in a separate vessel by mixing 100 parts of n-butyl acrylate as a (meth)acrylic acid ester monomer, 0.8 parts of sodium dodecylbenzenesulfonate, and 100 parts of deionized water. This monomer composition for seed particles was continuously added into the aforementioned reactor A over 4 hours to perform a polymerization reaction. A temperature of 80°C was maintained inside of the reactor during continuous addition of the monomer composition for seed particles. Once the continuous addition was complete, the polymerization reaction was continued for a further 3 hours at 90°C. This yielded a water dispersion of seed particles. Note that the seed particles had a volume-average particle diameter of 120 nm.

Next, a reactor including a stirrer was charged with the water dispersion of seed particles described above (16 parts of n-butyl acrylate in terms of solid content), 82 parts of ethylene glycol dimethacrylate (produced by Kyoeisha Chemical Co., Ltd.; product name: LIGHT ESTER EG) as a cross-linkable monomer, 2 parts of acrylic acid as an acid group-containing monomer, 2.5 parts of sodium dodecylbenzenesulfonate, 4.0 parts of t-butyl peroxy-2-ethylhexanoate (produced by NOF Corporation; product name: PERBUTYL O) as a polymerization initiator, and 200 parts of deionized water. These materials were stirred at 35°C for 12 hours to cause complete absorption of the cross-linkable monomer, the hydrophilic group-containing monomer, and the polymerization initiator by the seed particles. Thereafter, a temperature of 90°C was maintained inside the reactor while performing a polymerization reaction (seeded polymerization) for 5 hours.

Next, steam was introduced into the reactor, and unreacted monomer and initiator decomposition product were removed to yield a water dispersion containing a particulate polymer as non-conductive organic particles. The obtained non-conductive organic particles did not have a glass-transition temperature observed at 200°C or lower and had a volume-average particle diameter of 230 nm.

(Example 1)

<Production of conductive material dispersion liquid>

A disper blade was used to stir (3,000 rpm, 10 minutes) 4.0 parts of multi-walled carbon nanotubes (BET specific surface area: 250 $m^2$/g; hereinafter, referred to as "CNTs") as a conductive material, 10.0 parts of the NMP solution (solid content concentration: 8%) of the polymer A1 obtained as described above (equivalent to 0.8 parts of polymer A1 (solid content)), and 86.0 parts of NMP as a solvent, and then a bead mill (LMZ015 produced by Ashizawa Finetech Ltd.) in which zirconia beads of 1 mm in diameter were used was used to perform 1 hour of mixing at a circumferential speed of 12 m/s to produce a conductive material dispersion liquid.

<Production of slurry composition for positive electrode mixed material layer>

A slurry composition for a positive electrode mixed material layer was produced by adding together 97.84 parts of a ternary active material having a layered structure ($LiNi_{0.8}Co_{0.1}Mn_{0.1}O_2$; average particle diameter: 10 $\mu$m) as a positive electrode active material, 1.2 parts of polyvinylidene fluoride, 0.96 parts of the conductive material dispersion liquid obtained as described above (amount in terms of solid content; containing 0.80 parts of CNTs and 0.16 parts of polymer A1), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

<Production of positive electrode>

The obtained slurry composition for a positive electrode mixed material layer was applied onto aluminum foil of 20 $\mu$m in thickness serving as a current collector by a comma coater such as to have a specific coating weight.

The aluminum foil was then conveyed inside an oven having a temperature of 90°C for 2 minutes and an oven having a temperature of 120°C for 2 minutes at a speed of 200 mm/min so as to dry the slurry composition on the aluminum foil and thereby obtain a positive electrode web having a positive electrode mixed material layer formed on the current collector.

The positive electrode mixed material layer-side of the produced positive electrode web was subsequently roll pressed with a line pressure of 14 t (tons) in an environment having a temperature of 25 $\pm$ 3°C so as to adjust the positive electrode mixed material layer to a specific density and obtain a positive electrode. The positive electrode mixed material layer of the obtained positive electrode had a mass per unit area of 22 mg/cm$^2$, a density of 3.4 g/cm$^3$, and a void fraction of 28%.

<Production of negative electrode>

A 5 MPa pressure-resistant vessel equipped with a stirrer was charged with 33 parts of 1,3-butadiene as an aliphatic conjugated diene monomer, 3.5 parts of itaconic acid as an acidic group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer). This mixture was adjusted to pH 8 through addition of 5% sodium hydroxide aqueous solution and was then subjected to thermal-vacuum distillation to remove unreacted monomer. Thereafter, the mixture was cooled to 30°C or lower to obtain a water dispersion containing a binder for a negative electrode.

Next, 48.75 parts of artificial graphite and 48.75 parts of natural graphite as negative electrode active materials and 1 part of carboxymethyl cellulose as a thickener were loaded into a planetary mixer. These materials were diluted to a solid content concentration of 60% using deionized water and were then kneaded at a rotation speed of 45 rpm for 60 minutes. Thereafter, 1.5 parts in terms of solid content of the water dispersion containing the binder for a negative electrode obtained as described above was added and was kneaded therewith at a rotation speed of 40 rpm for 40 minutes. The viscosity was adjusted to 3,000 $\pm$ 500 mPa·s (measured by B-type viscometer at 25°C and 60 rpm) through addition of deionized water to produce a slurry for a negative electrode mixed material layer.

Next, copper foil of 15 $\mu$m in thickness was prepared as a current collector. The slurry for a negative electrode mixed material layer was applied onto both sides of the copper foil such as to have a coating weight after drying of 10 mg/cm$^2$ at each side and was then dried at 60°C for 20 minutes and at 120°C for 20 minutes. Thereafter, 2 hours of heat treatment was performed at 150°C to obtain a negative electrode web. This negative electrode web was rolled by roll pressing to produce a sheet-shaped negative electrode including the copper foil and negative electrode mixed material layers (both sides) of 1.6 g/cm$^3$ in density.

The slurry composition for a negative electrode mixed material layer was applied onto the surface of copper foil of 15 $\mu$m in thickness serving as a current collector by a comma coater such as to have a specific coating weight. The copper foil with the slurry composition for a negative electrode mixed material layer applied thereon was subsequently conveyed inside an oven having a temperature of 80°C for 2 minutes and an oven having a temperature of 110°C for 2 minutes at a speed of 400 mm/min so as to dry the slurry composition on the copper foil and obtain a negative electrode web having a negative electrode mixed material layer formed on the current collector.

The negative electrode mixed material layer-side of the produced negative electrode web was subsequently roll pressed with a line pressure of 11 t (tons) in an environment having a temperature of 25 $\pm$ 3°C so as to adjust the negative electrode mixed material layer to a specific density and obtain a negative electrode. The negative electrode mixed material layer of the obtained negative electrode had a mass per unit area of 13 mg/cm$^2$ and a density of 1.65 g/cm$^3$.

<Production of slurry composition for porous membrane>

Alumina particles (produced by Nippon Light Metal Co., Ltd.; product name: LS-256; volume-average particle diameter: 0.5 $\mu$m) were prepared as non-conductive inorganic particles, a carboxy/sulfo-containing polymer (Aqualic GL366 produced by Nippon Shokubai Co., Ltd.), which is a water-soluble polymer, was prepared as a dispersant, and carboxymethyl cellulose (produced by Daicel FineChem Ltd.; product name: D1220; degree of etherification: 0.8 to 1.0), which is a water-soluble polymer, was prepared as a viscosity modifier. Note that the viscosity of a 1% aqueous solution of the viscosity modifier was 10 mPa·s to 20 mPa·s.

A dispersion liquid was obtained by mixing 100 parts of the non-conductive inorganic particles, 0.5 parts of the dispersant, and deionized water and then performing 1 hour of treatment thereof using a bead mill (produced by Ashizawa Finetech Ltd.; product name: LMZ015). In addition, 2 parts in terms of solid content of the aqueous solution containing the viscosity modifier, 3 parts in terms of solid content of the water dispersion containing the water-insoluble polymer B1 obtained as described above, and 0.2 parts of a polyethylene glycol surfactant (produced by San Nopco Limited; product name: NOPTECHS ED-052; propylene oxide-ethylene oxide copolymer) as a wetting agent were mixed so as to produce a slurry composition for a porous membrane having a solid content concentration of 40%.

<Production of porous membrane-equipped separator>

A separator substrate made of polyethylene (produced by Asahi Kasei Corporation; product name: ND412; thickness: 12 $\mu$m) was prepared. The slurry composition for a porous membrane produced as described above was applied onto the surface of the prepared separator substrate and was dried at a temperature of 50°C for 3 minutes to obtain a separator including a porous layer at one side (porous membrane thickness: 3 $\mu$m).

<Production of lithium ion secondary battery>

A wound cell (discharge capacity equivalent to 700 mAh) was produced using the negative electrode, positive electrode, and porous membrane-equipped separator described above and was arranged inside of an aluminum laminate sheet casing. Note that the surface at the porous membrane-side of the porous membrane-equipped separator was arranged facing the positive electrode. Thereafter, the inside of the aluminum packing was filled with a LiPF$_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) as an electrolyte solution. The inside of the lithium ion secondary battery was subsequently depressurized to -95 kPa, this state was maintained for 1 minute, and then heat sealing was performed. One hour after this heat sealing, the lithium ion secondary battery, together with the aluminum laminate sheet casing, was pressed for 2 minutes under conditions of 80°C and 1 MPa to produce a lithium ion secondary battery.
The positive electrode, negative electrode, porous membrane-equipped separator, and lithium ion secondary battery produced as described above were used to evaluate the injectability, cell windability, cycle characteristics, rate characteristics, and high-potential rate characteristics of the lithium ion secondary battery and the heat resistance of the separator. The results are shown in Table 1.

(Example 2)

A positive electrode, a negative electrode, a porous membrane-equipped separator, and a lithium ion secondary battery were produced and various measurements and evaluations were performed in the same way as in Example 1 with the exception that production of a conductive material dispersion liquid and production of a slurry composition for a positive electrode mixed material layer were performed as described below. The results are shown in Table 1.

<Production of conductive material dispersion liquid>

A disper blade was used to stir (3,000 rpm, 10 minutes) 4.0 parts of multi-walled carbon nanotubes (BET specific surface area: 250 m$^2$/g; hereinafter referred to as "CNTs") as a conductive material, 1.875 parts of the NMP solution (solid content concentration: 8%) of the polymer A1 obtained as described above (equivalent to 0.15 parts of polymer A1 (solid content)), and 94.125 parts of NMP as a solvent, and then a bead mill (LMZ015 produced by Ashizawa Finetech Ltd.) in which zirconia beads of 1 mm in diameter were used was used to perform 1 hour of mixing at a circumferential speed of 12 m/s to produce a conductive material dispersion liquid.

<Production of slurry composition for positive electrode mixed material layer>

A slurry composition for a positive electrode mixed material layer was produced by adding together 97.77 parts of a ternary active material having a layered structure (LiNi$_{0.8}$Co$_{0.1}$Mn$_{0.1}$O$_2$; average particle diameter: 10 $\mu$m) as a positive electrode active material, 1.4 parts of polyvinylidene fluoride, 0.83 parts of the conductive material dispersion liquid obtained as described above (amount in terms of solid content; containing 0.80 parts of CNTs and 0.03 parts of polymer A1), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

(Example 3)

A positive electrode, a negative electrode, a porous membrane-equipped separator, and a lithium ion secondary battery were produced and various measurements and evaluations were performed in the same way as in Example 1 with the exception that production of a conductive material dispersion liquid and production of a slurry composition for a positive electrode mixed material layer were performed as described below. The results are shown in Table 1.

<Production of conductive material dispersion liquid>

A disper blade was used to stir (3,000 rpm, 10 minutes) 4.0 parts of multi-walled carbon nanotubes (BET specific surface area: 250 $m^2$/g; hereinafter referred to as "CNTs") as a conductive material, 10.0 parts of the NMP solution (solid content concentration: 8%) of the polymer A2 obtained as described above (equivalent to 0.8 parts of polymer A2 (solid content)), and 86.0 parts of NMP as a solvent, and then a bead mill (LMZ015 produced by Ashizawa Finetech Ltd.) in which zirconia beads of 1 mm in diameter were used was used to perform 1 hour of mixing at a circumferential speed of 12 m/s to produce a conductive material dispersion liquid.

<Production of slurry composition for positive electrode mixed material layer>

A slurry composition for a positive electrode mixed material layer was produced by adding together 94.2 parts of a ternary active material having a layered structure ($LiNi_{0.8}Co_{0.1}Mn_{0.1}O_2$; average particle diameter: 10 $\mu$m) as a positive electrode active material, 4.84 parts of the NMP solution of the polymer A2 obtained as described above (amount in terms of polymer A2 (solid content)), 0.96 parts of the conductive material dispersion liquid obtained as described above (amount in terms of solid content; containing 0.80 parts of CNTs and 0.16 parts of polymer A2), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

(Example 4)

A positive electrode, a negative electrode, a porous membrane-equipped separator, and a lithium ion secondary battery were produced and various measurements and evaluations were performed in the same way as in Example 1 with the exception that in production of the positive electrode, the roll pressing conditions of the positive electrode web were changed to a line pressure of 16 t (tons), and the roll gap was adjusted so as to change the density of the positive electrode mixed material layer from 3.4 g/cm$^3$ to 3.65 g/cm$^3$. The results are shown in Table 1.

(Example 5)

A positive electrode, a negative electrode, a porous membrane-equipped separator, and a lithium ion secondary battery were produced and various measurements and evaluations were performed in the same way as in Example 1 with the exception that in production of the positive electrode, the roll pressing conditions of the positive electrode web were changed to a line pressure of 20 t (tons), and the roll gap was adjusted so as to change the density of the positive electrode mixed material layer from 3.4 g/cm$^3$ to 3.8 g/cm$^3$. The results are shown in Table 1.

(Example 6)

A positive electrode, a negative electrode, a porous membrane-equipped separator, and a lithium ion secondary battery were produced and various measurements and evaluations were performed in the same way as in Example 1 with the exception that in production of the slurry composition for a positive electrode mixed material layer, 97.84 parts of an active material having a layered structure ($LiCoO_2$; average particle diameter: 10 $\mu$m) was used instead of a ternary active material having a layered structure ($LiNi_{0.8}Co_{0.1}Mn_{0.1}O_2$; average particle diameter: 10 $\mu$m) as a positive electrode active material, and that in production of the positive electrode, the coating weight of the slurry composition for a positive electrode mixed material layer and the roll pressing conditions of the positive electrode web were adjusted so as to change the density of the positive electrode mixed material layer from 3.4 g/cm$^3$ to 3.85 g/cm$^3$. The results are shown in Table 1.

(Example 7)

A positive electrode, a negative electrode, a porous membrane-equipped separator, and a lithium ion secondary battery were produced and various measurements and evaluations were performed in the same way as in Example 1 with the exception that production of a conductive material dispersion liquid and production of a slurry composition for a positive electrode mixed material layer were performed as described below, and that in production of the positive electrode, the coating weight of the slurry composition for a positive electrode mixed material layer and the roll pressing conditions of the positive electrode web were adjusted so as to change the mass per unit area of the positive electrode mixed material layer from 22 mg/cm$^2$ to 20 mg/cm$^2$ and change the density of the positive electrode mixed material layer from 3.4 g/cm$^3$ to 2.5 g/cm$^3$. The results are shown in Table 1.

<Production of conductive material dispersion liquid>

A disper blade was used to stir (3,000 rpm, 10 minutes) 10.0 parts of acetylene black (produced by Denka Company Limited; product name: HS-100) as a conductive material, 10.0 parts of the NMP solution (solid content concentration: 8%) of the polymer A1 obtained as described above (equivalent to 0.8 parts of polymer A1 (solid content)), and 80.0 parts of NMP as a solvent, and then a bead mill (LMZ015 produced by Ashizawa Finetech Ltd.) in which zirconia beads of 1 mm in diameter were used was used to perform 1 hour of mixing at a circumferential speed of 12 m/s to produce a conductive material dispersion liquid.

<Production of slurry composition for positive electrode mixed material layer>

A slurry composition for a positive electrode mixed material layer was produced by adding together 96.64 parts of an active material having an olivine structure (LiFePO$_4$; average particle diameter: 1 μm) as a positive electrode active material, 1.2 parts of polyvinylidene fluoride, 2.16 parts of the conductive material dispersion liquid obtained as described above (amount in terms of solid content; containing 2.00 parts of acetylene black and 0.16 parts of polymer A1), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry for a positive electrode was within a range of 4,000 mPa·s to 5,000 mPa·s.

(Example 8)

A positive electrode, a negative electrode, a porous membrane-equipped separator, and a lithium ion secondary battery were produced and various measurements and evaluations were performed in the same way as in Example 1 with the exception that in production of the slurry composition for a porous membrane, the water dispersion containing the water-insoluble polymer B2 was used instead of the water dispersion containing the water-insoluble polymer B1. The results are shown in Table 1.

(Example 9)

A positive electrode, a negative electrode, a porous membrane-equipped separator, and a lithium ion secondary battery were produced and various measurements and evaluations were performed in the same way as in Example 1 with the exception that production of a slurry composition for a porous membrane was performed as described below. The results are shown in Table 2.

<Production of slurry composition for porous membrane>

Alumina particles (produced by Nippon Light Metal Co., Ltd.; product name: LS-256; volume-average particle diameter: 0.5 μm) were prepared as non-conductive inorganic particles, a carboxy/sulfo-containing polymer (Aqualic GL366 produced by Nippon Shokubai Co., Ltd.), which is a water-soluble polymer, was prepared as a dispersant, and carboxymethyl cellulose (produced by Daicel FineChem Ltd.; product name: D1220; degree of etherification: 0.8 to 1.0), which is a water-soluble polymer, was prepared as a viscosity modifier. Note that the viscosity of a 1% aqueous solution of the viscosity modifier was 10 mPa·s to 20 mPa·s.

A dispersion liquid was obtained by mixing 100 parts of the non-conductive inorganic particles, 0.5 parts of the dispersant, and deionized water and then performing 1 hour of treatment thereof using a bead mill (produced by Ashizawa Finetech Ltd.; product name: LMZ015). In addition, 0.3 parts in terms of solid content of the aqueous solution containing the viscosity modifier, 0.3 parts in terms of solid content of the aqueous solution containing the water-soluble polymer B6, 3 parts in terms of solid content of the water dispersion containing the water-insoluble polymer B3 obtained as described above, and 0.2 parts of a polyethylene glycol surfactant (produced by San Nopco Limited; product name: NOPTECHS ED-052; propylene oxide-ethylene oxide copolymer) as a wetting agent were mixed so as to produce a slurry composition for a porous membrane having a solid content concentration of 40%.

(Example 10)

A positive electrode, a negative electrode, a porous membrane-equipped separator, and a lithium ion secondary battery were produced and various measurements and evaluations were performed in the same way as in Example 1 with the exception that in production of the slurry composition for a porous membrane, boehmite particles (produced by Nabaltec AG; product name: APYRAL AOH60; particle diameter: 0.9 $\mu$m) were used instead of alumina particles (produced by Nippon Light Metal Co., Ltd.; product name: LS-256; volume-average particle diameter: 0.5 $\mu$m) as non-conductive inorganic particles, the water dispersion containing the water-insoluble polymer B4 was used instead of the water dispersion containing the water-insoluble polymer B1, and 0.4 parts of ammonium polyacrylate (produced by Toagosei Co., Ltd.; product name: ARON A-30SL) was used instead of a carboxy/sulfo-containing polymer (Aqualic GL366 produced by Nippon Shokubai Co., Ltd.) as a dispersant. The results are shown in Table 2.

(Example 11)

A positive electrode, a negative electrode, a porous membrane-equipped separator, and a lithium ion secondary battery were produced and various measurements and evaluations were performed in the same way as in Example 1 with the exception that in production of the slurry composition for a porous membrane, boehmite particles (produced by Nabaltec AG; product name: APYRAL AOH60; particle diameter: 0.9 $\mu$m) were used instead of alumina particles (produced by Nippon Light Metal Co., Ltd.; product name: LS-256; volume-average particle diameter: 0.5 $\mu$m) as non-conductive inorganic particles, the water dispersion containing the water-insoluble polymer B5 was used instead of the water dispersion containing the water-insoluble polymer B1, and 0.4 parts of ammonium polyacrylate (produced by Toagosei Co., Ltd.; product name: ARON A-30SL) was used instead of a carboxy/sulfo-containing polymer (Aqualic GL366 produced by Nippon Shokubai Co., Ltd.) as a dispersant. The results are shown in Table 2.

(Example 12)

A positive electrode, a negative electrode, a porous membrane-equipped separator, and a lithium ion secondary battery were produced and various measurements and evaluations were performed in the same way as in Example 1 with the exception that production of a slurry composition for a porous membrane was performed as described below. The results are shown in Table 2.

<Production of slurry composition for porous membrane>

Boehmite particles (produced by Nabaltec AG; product name: APYRAL AOH60; particle diameter: 0.9 $\mu$m) were prepared as non-conductive inorganic particles and ammonium polyacrylate (produced by Toagosei Co., Ltd.; product name: ARON A-30SL) was prepared as a dispersant.
A dispersion liquid was obtained by mixing 100 parts of the non-conductive inorganic particles, 0.5 parts of the dispersant, and deionized water and then performing 1 hour of treatment thereof using a bead mill (produced by Ashizawa Finetech Ltd.; product name: LMZ015). In addition, 4 parts in terms of solid content of the aqueous solution containing the water-soluble polymer B7 and 0.2 parts of a polyethylene glycol surfactant (produced by San Nopco Limited; product name: NOPTECHS ED-052; propylene oxide-ethylene oxide copolymer) as a wetting agent were mixed so as to produce a slurry composition for a porous membrane having a solid content concentration of 40%.

(Example 13)

A positive electrode, a negative electrode, a porous membrane-equipped separator, and a lithium ion secondary battery were produced and various measurements and evaluations were performed in the same way as in Example 1 with the exception that the previously described non-conductive organic particles (particulate polymer) were used instead of alumina particles, which are non-conductive inorganic particles, and that production of a slurry composition for a porous membrane was performed as described below. The results are shown in Table 2.

<Production of slurry composition for porous membrane>

A slurry composition for a porous membrane having a solid content concentration of 20% was produced by mixing 100 parts in terms of solid content of the water dispersion containing the non-conductive organic particles (particulate polymer), 3 parts in terms of solid content of the aqueous solution containing the water-soluble polymer B7, and 4 parts in terms of solid content of the water dispersion containing the water-insoluble polymer B1.

(Comparative Example 1)

A positive electrode, a negative electrode, a porous membrane-equipped separator, and a lithium ion secondary battery were produced and various measurements and evaluations were performed in the same way as in Example 1 with the exception that production of a slurry composition for a positive electrode mixed material layer was performed as described below without performing production of a conductive material dispersion liquid. The results are shown in Table 2.

<Production of slurry composition for positive electrode mixed material layer>

A slurry composition for a positive electrode mixed material layer was produced by adding together 98 parts of a ternary active material having a layered structure ($LiNi_{0.8}Co_{0.1}Mn_{0.1}O_2$; average particle diameter: 10 $\mu$m) as a positive electrode active material, 1.2 parts of polyvinylidene fluoride, 0.8 parts of multi-walled carbon nanotubes (BET specific surface area: 250 m$^2$/g) as a conductive material, and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

(Comparative Example 2)

A positive electrode, a negative electrode, a porous membrane-equipped separator, and a lithium ion secondary battery were produced and various measurements and evaluations were performed in the same way as in Example 1 with the exception that production of a slurry composition for a positive electrode mixed material layer was performed as described below. The results are shown in Table 2.

<Production of slurry for positive electrode>

A slurry composition for a positive electrode mixed material layer was produced by adding together 89.2 parts of a ternary active material having a layered structure ($LiNi_{0.8}Co_{0.1}Mn_{0.1}O_2$; average particle diameter: 10 $\mu$m) as a positive electrode active material, 9.86 parts of the NMP solution of the polymer A1 obtained as described above (amount in terms of polymer A1 (solid content)), 0.96 parts of the conductive material dispersion liquid obtained as described above (amount in terms of solid content; containing 0.80 parts of CNTs and 0.16 parts of polymer A1), and NMP as a solvent and mixing (60 rpm, 30 minutes) these materials in a planetary mixer. Note that the additive amount of NMP was adjusted such that the viscosity (measured by single-cylinder rotational viscometer in accordance with JIS Z8803:1991; temperature: 25°C; rotation speed: 60 rpm) of the obtained slurry composition for a positive electrode mixed material layer was within a range of 4,000 mPa·s to 5,000 mPa·s.

(Comparative Example 3)

A positive electrode, a negative electrode, and a lithium ion secondary battery were produced and various measurements and evaluations were performed in the same way as in Example 1 with the exception that production of a slurry composition for a porous membrane and production of a porous membrane-equipped separator were not performed and that a separator substrate made of polyethylene that did not include a porous membrane was used instead of a porous membrane-equipped separator as a separator. The results are shown in Table 2.

In Tables 1 and 2, shown below:

"Butadiene" indicates 1,3-butadiene;
"PVdF" indicates polyvinylidene fluoride;
"PE" indicates polyethylene;
"Molecular weight" indicates weight-average molecular weight (Mw);

"X/Y" indicates ratio (X/Y) of X and Y when total proportional content of acid group-containing monomer units, hydroxyl group-containing monomer units, epoxy group-containing monomer units, amide group-containing monomer units, and nitrile group-containing monomer units in water-insoluble polymer contained in porous membrane is denoted as X and proportional content of (meth)acrylonitrile monomer units in polymer A contained in positive electrode mixed material layer is denoted as Y;

"NMC532" indicates ternary active material having layered structure ($LiNi_{0.8}Co_{0.1}Mn_{0.1}O_2$);

"LCO" indicates active material having layered structure ($LiCoO_2$);

"LFP" indicates active material having olivine structure ($LiFePO_4$);

"CNT" indicates multi-walled carbon nanotubes;

"AcB" indicates acetylene black;

"EDMA" indicates ethylene glycol dimethacrylate;

"BA" indicates butyl acrylate;

"AA" indicates acrylic acid;

"2EHA" indicates 2-ethylhexyl acrylate;

"AN" indicates acrylonitrile;

"MAA" indicates methacrylic acid;

"N-MA" indicates N-methylolacrylamide;

"AGE" indicates allyl glycidyl ether;

"GMA" indicates glycidyl methacrylate;

"AAm" indicates acrylamide;

"AMA" indicates allyl methacrylate;

"ST" indicates styrene;

"Particle diameter" indicates volume-average particle diameter;

"Tg" indicates glass-transition temperature;

"Degree of swelling" indicates degree of swelling in electrolyte solution;

"CMC" indicates carboxymethyl cellulose;

"HEAAm" indicates N-hydroxyethylacrylamide; and

"PO/EO copolymer" indicates propylene oxide-ethylene oxide copolymer.

[Table 1]

| | | | | Example 1 | Example 2 | Example 3 | Example 4 | Example 5 | Example 6 | Example 7 | Example 8 |
|---|---|---|---|---|---|---|---|---|---|---|---|
| Positive electrode mixed material layer | Polymer A | | Type | A1 | A1 | A2 | A1 | A1 | A1 | A1 | A1 |
| | | | Acrylonitrile units [mass%] | 35 | 35 | 35 | 35 | 35 | 35 | 35 | 35 |
| | | | Butadiene units and hydrogenated butadiene units [mass%] | 65 | 65 | 65 | 65 | 65 | 65 | 65 | 65 |
| | | | Iodine value [mg/100 mg] | 20 | 20 | 20 | 20 | 20 | 20 | 20 | 20 |
| | | | Molecular weigh | 100000 | 100000 | 280000 | 100000 | 100000 | 100000 | 100000 | 100000 |
| | | | Proportional content of structural units derived from butadiene polymerized by 1,2-bonding [mass%] | 9.1 | 9.1 | 9.1 | 9.1 | 9.1 | 9.1 | 9.1 | 9.1 |
| | | | Content [mass%] | 0.16 | 0.03 | 5 | 0.16 | 0.16 | 0.16 | 0.16 | 0.16 |
| | PVdF | | Content [mass%] | 1.2 | 1.4 | 0 | 1.2 | 1.2 | 1.2 | 1.2 | 1.2 |
| | Positive electrode active material Conductive | | Type | NMC532 | NMC532 | NMC532 | NMC532 | NMC532 | LCO | LFP | NMC532 |
| | | | Content [mass%] | 97.84 | 97.77 | 942 | 97.84 | 97.84 | 97.84 | 96.64 | 97.84 |
| | | | Type | CNT | CNT | CNT | CNT | CNT | CNT | AcB | CNT |
| | material Content [mass%] | | | 0.8 | 0.8 | 0.8 | 0.8 | 0.8 | 0.8 | 2 | 0.8 |
| | Mass per unit area [mg/cm$^2$] | | | 22 | 22 | 22 | 22 | 22 | 22 | 20 | 22 |
| | Density [g/cm$^3$] | | | 3.4 | 3.4 | 3.3 | 3.65 | 3.8 | 3.85 | 2.5 | 3.4 |
| | Void fraction [%] | | | 28 | 28 | 28 | 23 | 17 | 23 | 30 | 28 |
| | | Non-conductive particles | Separator substrate (thickness) | PE (9 μm) | PE (9 μm) | PE (9 μm) | PE (9 μm) | PE (9 μm) | PE (9 μm) | PE (9 μm) | PE (9 μm) |
| | | | Inorganic particles | Alumina | Alumina | Alumina | Alumina | Alumina | Alumina | Alumina | Alumina |
| | | | Particulate polymer — Chemical composition | - | - | - | - | - | - | - | - |
| | | | Particulate polymer — Physical properties | | | | | | | | |

| | | | | | | Example 1 | Example 2 | Example 3 | Example 4 | Example 5 | Example 6 | Example 7 | Example 8 |
|---|---|---|---|---|---|---|---|---|---|---|---|---|---|
| Separator | Porous membrane | Water-in-soluble polymer | | | Type | B1 | B1 | B1 | B1 | B1 | B1 | B1 | B2 |
| | | | | | (Meth)acrylic acid ester monomer units [mass%] | BA 80 | BA 80 | BA 80 | BA 80 | BA 80 | BA 80 | BA 80 | BA 933 |
| | | | Polar containing monomer units | | Nitrile group-containing monomer units [mass%] | AN 12.5 | AN 12.5 | AN 12.5 | AN 12.5 | AN 12.5 | AN 12.5 | AN 12.5 | AN 2 |
| | | | | | Acid group-containing monomer units [mass%] | MAA2 | MAA2 | MAA2 | MAA2 | MAA2 | MAA2 | MAA2 | MAA2 |
| | | | | | Hydroxyl group-cortaiing monomer units [mass%] | N-MA 4 | N-MA 4 | N-MA 4 | N-MA 4 | N-MA 4 | N-MA 4 | N-MA 4 | N-MA 1.2 |
| | | | | | Epoxy group-containing monomer units [mass%] | - | - | - | - | - | - | - | AGE 1.5 |
| | | | | | Amide group-containing monomer units [mass%] | AAm 1.5 | AAm 1.5 | AAm 1.5 | AAm 1.5 | AAm 1.5 | AAm 1.5 | AAm 1.5 | - |
| | | | Other monomer units | | Cross-linkable monomer units [mass%] | - | - | - | - | - | - | - | - |
| | | | | | Aromatic vinyl monomer units [mass%] | | | | | | | | |
| | | | | | Physical properties | Particle diameter: 140 nm Tg:-12°C Degree of swelling: x5.5 | Particle diameter: 140 nm Tg:-12°C Degree of swelling: x5.5 | Particle diameter: 140 nm Tg: -12°C Degree of swelling: x5.5 | Particle diameter: 140 nm Tg: -12°C Degree of swelling: x5.5 | Particle diameter: 140 nm Tg:-12°C Degree of swelling: x5.5 | Particle diameter: 140 nm Tg:-12°C Degree of swelling: x5.5 | Particle diameter: 140 nm Tg:-12°C Degree of sweling: x5.5 | Particle diameter: 350 nm Tg: -40°C Degree of swelling: x3.8 |
| | | | | | Content [parts by mass/100 parts by mass of non-conductive particles] | 3 | 3 | 3 | 3 | 3 | 3 | 3 | 3 |
| | | | | | X/Y | 0.57 | 0.57 | 0.57 | 0.57 | 0.57 | 0.57 | 0.57 | 0.19 |

37

(continued)

| | | | | | Example 1 | Example 2 | Example 3 | Example 4 | Example 5 | Example 6 | Example 7 | Example 8 |
|---|---|---|---|---|---|---|---|---|---|---|---|---|
| Water-soluble polymer | Dispersant | Type | | | Carboxy/ sulfo-containing polymer | Carboxy/ sulfo-containing polymer | Carboxy/ sulfo-containing polymer | Carboxy/ sulfo-containing polymer | Carboxyl sulfo-containing polymer | Carboxy/ sulfo-containing polymer | Carboxyl sulfo-containing polymer | Carboxy/ sulfo-containing polymer |
| | | Content [parts by mass/100 parts by mass of non-conductive particles] | | | 0.5 | 0.5 | 0.5 | 0.5 | 0.5 | 0.5 | 0.5 | 0.5 |
| | Thickener | Cellulose-based/ poly(meth)acrylic acid-based | | | CMC | CMC | CMC | CMC | CMC | CMC | CMC | CMC |
| | | Nitrogen-based polymer | Type | | | | | | | | | |
| | | | Nitrogen-containing monomer units [mass%] | - | - | - | - | - | - | - | - | - |
| | | | Other monomer units [mass%] | | | | | | | | | |
| | | | Molecular weight | | | | | | | | | |
| | | Content [parts by mass/100 parts by mass of non-conductive particles] | | | 2 | 2 | 2 | 2 | 2 | 2 | 2 | 2 |
| | Wetting agent | Type | | | PO/EO co-polymer | PO/EO co-polymer | PO/EO co-polymer | PO/EO co-polymer | PO/EO co-polymer | PO/EO co-polymer | PO/EO co-polymer | PO/EO co-polymer |
| | | Content [parts by mass/100 parts by mass of non-conductive particles] | | | 0.2 | 0.2 | 0.2 | 0.2 | 0.2 | 0.2 | 0.2 | 0.2 |

EP 4 287 298 A1

38

(continued)

| | | Example 1 | Example 2 | Example 3 | Example 4 | Example 5 | Example 6 | Example 7 | Example 8 |
|---|---|---|---|---|---|---|---|---|---|
| | Thickness [μm] | 3 | 3 | 3 | 3 | 3 | 3 | 3 | 3 |
| Evaluations | Injectability | A | C | A | B | C | B | A | B |
| | Cell windability | A | C | A | B | C | B | A | A |
| | Cycle characteristics (25°C) | A | A | B | A | B | A | A | A |
| | Rate characteristics (-10°C) | A | C | C | B | C | B | A | B |
| | High-potential rate characteristics (25°C) | A | A | B | B | C | B | A | A |
| | Heat shrinkage resistance of separator in electrolyte solution | A | A | A | A | A | A | A | B |

[Table 2]

| | | | Example 9 | Example 10 | Example 11 | Example 12 | Example 13 | Comparative Example 1 | Comparative Example 2 | Comparative Example 3 |
|---|---|---|---|---|---|---|---|---|---|---|
| Positive electrode mixed material layer | Polymer A | Type | A1 | A1 | A1 | A1 | A1 | | A1 | A1 |
| | | Acrylonitrile units [mass%] | 35 | 35 | 35 | 35 | 35 | | 35 | 35 |
| | | Butadiene units and hydrogenated butadiene units [mass%] | 65 | 65 | 65 | 65 | 65 | | 65 | 65 |
| | | Iodine value [ma/100 mg] | 20 | 20 | 20 | 20 | 20 | - | 20 | 20 |
| | | Molecular weight | 100000 | 100000 | 100000 | 100000 | 100000 | | 100000 | 100000 |
| | | Proportional content of structural units derived from butadiene polymerized by 1,2-bonding [mass%] | 9.1 | 9.1 | 9.1 | 9.1 | 9.1 | | 9.1 | 9.1 |
| | | Content [mass%] | 0.16 | 0.16 | 0.16 | 0.16 | 0.16 | 0 | 10 | 0.16 |
| | PVdF | Content [mass%] | 1.2 | 1.2 | 1.2 | 1.2 | 1.2 | 1.2 | 0 | 1.2 |
| | Positive electrode active material | Type | NMC532 | NMC532 | NMC532 | NMC532 | NMC532 | NMC532 | NMC532 | NMC532 |
| | | Content [mass%] | 97.84 | 97.84 | 97.84 | 97.84 | 97.84 | 98 | 89.2 | 97.84 |
| | Conductive material | Type | CNT | CNT | CNT | CNT | CNT | CNT | CNT | CNT |
| | | Content [mass%] | 0.8 | 0.8 | 0.8 | 0.8 | 0.8 | 0.8 | 0.8 | 0.8 |
| | | Mass per unit area [mg/cm$^2$] | 22 | 22 | 22 | 22 | 22 | 22 | 22 | 22 |
| | | Density [g/cm$^3$] | 3.4 | 3.4 | 3.4 | 3.4 | 3.4 | 3.4 | 3.4 | 3.4 |
| | | Void fraction [%] | 28 | 28 | 28 | 28 | 28 | 28 | 28 | 28 |
| | | Separator substrate (thickness) | PE (9 um) | PE (9 um) | PE (9 um) | PE (9 μm) | PE (9 μm) | PE (9 um) | PE (9 um) | PE (9 μm) |

(continued)

| | | | Example 9 | Example 10 | Example 11 | Example 12 | Example 13 | Comparative Example 1 | Comparative Example 2 | Comparative Example 3 |
|---|---|---|---|---|---|---|---|---|---|---|
| Non-conductive particles | Inorganic particles | Chemical composition | Alumina | Boehmite | Boehmite | Boehmite | - | Alumina | Alumina | - |
| | Particulate polymer | Physical properties | - | - | - | - | EDMA/BA/AA = 82/16/2 — Particle diameter: 230 nm | - | - | |
| | | Type | B3 | B4 | B5 | | B1 | B1 | B1 | |
| | | (Meth)acrylic acid ester monomer units [mass%] | BA 92.8 | 2EHA 66.1 | BA 66 | | BA 80 | BA 80 | BA 80 | |
| | Polar group-containing monomer units | Nitrile group-containing monomer units [mass%] | AN 2 | - | AN 10 | | AN 12.5 | AN 12.5 | AN 12.5 | |
| | | Acid group-containing monomer units [mass%] | MAA 2 | AA4 | MAA 2 | | MAA 2 | MAA 2 | MAA 2 | |
| | | Hydroxyl group-containing monomer units [mass%] | N-MA 1.6 | - | N-MA 2 | | N-MA 4 | N-MA 4 | N-MA 4 | |
| | | Epoxy group-containing monomer units [mass%] | - | AGE 1.7 | GMA 20 | | - | - | - | |
| | | Amide group-containing monomer units [mass%] | AAm 1.6 | - | - | | AAml.5 | AAml.5 | AAml.5 | |
| Water-polymer | Other monomer units | Cross-linkable monomer units [mass%] | - | AMA0.2 | - | | - | - | - | |
| | | Aromatic vinyl monomer units [mass%] | - | ST 28 | - | | - | - | - | |

(continued)

| | | | | Example 9 | Example 10 | Example 11 | Example 12 | Example 13 | Comparative Example 1 | Comparative Example 2 | Comparative Example 3 |
|---|---|---|---|---|---|---|---|---|---|---|---|
| Separator | Porous membrane | | Physical properties | Particle diameter: 400 nm Tg: -40°C Degree of swelling: x4.0 | Particle diameter 310 nm Tg: -25°C Degree of swelling: xl.5 | Particle diameter 140 nm Tg: 0°C Degree of swelling: ×3.2 | | Particle diameter: 140 nm Tg:-12°C Degree of swelling: ×5.5 | Particle diameter: : 140 nm Tg: -12°C Degree of swelling: x5.5 | Particle diameter : 140 nm Tg:-12°C Degree of swelling: x5.5 | No porous membrane |
| | | | Content [parts by mass/100 parts by mass of non-conductive particles] | 3 | 3 | 3 | | 4 | 3 | 3 | |
| | | | X/Y | 0.21 | 0.16 | 0.97 | | 0.57 | | 0.57 | |
| | | Dispersant | Type | Carboxyl sulfo-containing polymer | Ammonium polyacrylate | Ammonium polyacrylate | Ammonium polyacrylate | - | Carboxyl sulfo-containing polymer | Carboxy/ sulfo-containing polymer | |
| | | | Content [parts by mass/100 parts by mass of non-conductive particles] | 0.5 | 0.4 | 0.4 | 0.4 | - | 0.5 | 0.5 | |

(continued)

| | | | | | Example 9 | Example 10 | Example 11 | Example 12 | Example 13 | Comparative Example 1 | Comparative Example 2 | Comparative Example 3 |
|---|---|---|---|---|---|---|---|---|---|---|---|---|
| Water-soluble polymer | Tlickener | | Cellulose-based!poly(meth)acrylic acid-based | | CMC/ B6 (composition: BA/EA/MAA/EDMA = 12.2/57/30/0.8) | CMC | CMC | - | - | CMC | CMC | |
| | | Nitrogen-based polymer | Type | | - | - | - | B7 | B7 | - | - | |
| | | | Nitrogen-containing monomer units [mass%] | | | | | AAm/HEAAm = 74/16 | AAm/HEAAm= 74/16 | | | |
| | | | Other monomer units [mass%] | | | | | AA 10 | AA 10 | | | |
| | | | Molecular weight | | | | | 290000 | 290000 | | | |
| | | Content [parts by mass/100 parts by mass of non-conductive particles] | | | 1.3/0.3 | 2 | 2 | 4 | 3 | 2 | 2 | |
| | Wetting agent | Type | | | PO/EO copolymer | PO/EO co-polymer | PO/EO co-polymer | PO/EO co-polymer | - | PO/EO co-polymer | PO/EO co-polymer | |
| | | Content [parts by mass/100 parts by mass of non-conductive particles] | | | 0.2 | 0.2 | 0.2 | 0.2 | | 0.2 | 0.2 | |
| Thickness [μm] | | | | | 3 | 3 | 3 | 3 | 3 | 3 | 3 | |

| Evaluations | | Example 9 | Example 10 | Example 11 | Example 12 | Example 13 | Comparative Example 1 | Comparative Example 2 | Comparative Example 3 |
|---|---|---|---|---|---|---|---|---|---|
| | Injectability | B | C | B | A | A | D | D | D |
| | Cell windability | A | A | A | B | A | D | B | C |
| | Cycle characteristics (25°C) | A | A | B | A | A | C | D | B |
| | Rate characteristics (-10°C) | B | C | A | A | A | D | D | B |
| | High-potential rate characteristics (25°C) | A | B | B | A | A | D | D | D |
| | Heat shrinkage resistance of separator in electrolyte solution | B | B | B | A | B | A | A | D |

It can be seen from Tables 1 and 2 that electrolyte solution mobility of a non-aqueous secondary battery is excellent in a case in which, as in Examples 1 to 13, the non-aqueous secondary battery includes a positive electrode, a negative electrode, an electrolyte solution, and a separator, the positive electrode includes a positive electrode mixed material layer containing a positive electrode active material, a conductive material, and a polymer A, the polymer A is either or both of a polymer including a (meth)acrylonitrile monomer unit and a conjugated diene monomer unit or a hydrogenated product thereof, the content of the polymer A in the positive electrode mixed material layer is within a specific range, and the separator includes a porous membrane containing non-conductive particles and a polymer B.

In contrast, it can be seen that electrolyte solution mobility of a non-aqueous secondary battery is poor in Comparative Example 1 in which a positive electrode mixed material layer that does not contain the specific polymer A described above is used.

It can also be seen that electrolyte solution mobility of a non-aqueous secondary battery is also poor in Comparative Example 2 in which the content of the polymer A in the positive electrode mixed material layer exceeds a specific range.

Moreover, it can be seen that electrolyte solution mobility of a non-aqueous secondary battery is also poor in Comparative Example 3 in which a separator that does not include the specific porous membrane described above is used.

INDUSTRIAL APPLICABILITY

According to the present disclosure, it is possible to provide a non-aqueous secondary battery having excellent electrolyte solution mobility.

**Claims**

1. A non-aqueous secondary battery comprising a positive electrode, a negative electrode, an electrolyte solution, and a separator, wherein

    the positive electrode includes a current collector and a positive electrode mixed material layer formed on the current collector,
    the positive electrode mixed material layer contains a positive electrode active material, a conductive material, and a polymer A,
    the polymer A includes a nitrile group-containing monomer unit and either or both of a conjugated diene monomer unit and an alkylene structural unit,
    content of the polymer A in the positive electrode mixed material layer is not less than 0.01 mass% and not more than 8 mass%,
    the separator includes a separator substrate and a porous membrane formed on the separator substrate, and
    the porous membrane contains non-conductive particles and a polymer B.

2. The non-aqueous secondary battery according to claim 1, wherein proportional content of the nitrile group-containing monomer unit in the polymer A is not less than 10 mass% and not more than 50 mass%.

3. The non-aqueous secondary battery according to claim 1 or 2, wherein the positive electrode mixed material layer has a void fraction of not less than 15% and not more than 50%.

4. The non-aqueous secondary battery according to any one of claims 1 to 3, wherein the polymer B includes a water-insoluble polymer.

5. The non-aqueous secondary battery according to claim 4, wherein the water-insoluble polymer includes not less than 1 mass% and not more than 40 mass%, in total, of one or more polar group-containing monomer units selected from the group consisting of an acid group-containing monomer unit, a hydroxyl group-containing monomer unit, an epoxy group-containing monomer unit, an amide group-containing monomer unit, and a nitrile group-containing monomer unit.

6. The non-aqueous secondary battery according to claim 5, wherein, when total proportional content of the polar group-containing monomer units in the water-insoluble polymer is denoted as X and proportional content of the nitrile group-containing monomer unit in the polymer A is denoted as Y, a ratio X/Y of X and Y is not less than 0.1 and not more than 1.2.

7. The non-aqueous secondary battery according to any one of claims 4 to 6, wherein the water-insoluble polymer includes not less than 40 mass% and not more than 99 mass% of a (meth)acrylic acid ester monomer unit.

8. The non-aqueous secondary battery according to any one of claims 1 to 3, wherein

   the polymer B only includes a water-soluble polymer, and
   the water-soluble polymer includes a polymer that includes a nitrogen-containing monomer unit.

9. The non-aqueous secondary battery according to any one of claims 1 to 8, wherein

   the non-conductive particles include a particulate polymer, and
   the particulate polymer has a glass-transition temperature of higher than 200°C.

10. The non-aqueous secondary battery according to any one of claims 1 to 9, wherein total proportional content of a structural unit derived from a conjugated diene monomer polymerized by 1,2-bonding and a structural unit derived from a conjugated diene monomer polymerized by 3,4-bonding in the polymer A is 30 mass% or less.

11. The non-aqueous secondary battery according to any one of claims 1 to 10, wherein the positive electrode mixed material layer and the porous membrane are in contact.

## INTERNATIONAL SEARCH REPORT

| | International application No. |
|---|---|
| | **PCT/JP2022/003144** |

**A.    CLASSIFICATION OF SUBJECT MATTER**

*H01M 4/13*(2010.01)i; *H01M 4/62*(2006.01)i; *H01M 10/052*(2010.01)i; *H01M 50/409*(2021.01)i
FI:    H01M50/409; H01M4/13; H01M4/62 Z; H01M10/052

According to International Patent Classification (IPC) or to both national classification and IPC

**B.    FIELDS SEARCHED**

Minimum documentation searched (classification system followed by classification symbols)

H01M4/13; H01M4/62; H01M10/052; H01M50/409

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2021-007109 A (LG CHEMICAL LTD) 21 January 2021 (2021-01-21) paragraphs [0086], [0129], [0172], example 1 | 1-2 |
| Y | | 3-9, 11 |
| Y | JP 2018-055836 A (NISSAN MOTOR CO., LTD.) 05 April 2018 (2018-04-05) claim 1, paragraph [0017] | 3 |
| Y | JP 2006-108113 A (TOSHIBA CORP) 20 April 2006 (2006-04-20) claim 3, paragraph [0136] | 3 |
| Y | JP 2018-509493 A (HERCULES LLC) 05 April 2018 (2018-04-05) paragraphs [0008], [0092], example 34, tables 1-3, 3, fig. 4 | 4-7, 11 |
| Y | JP 2018-026266 A (ARAKAWA CHEM IND) 15 February 2018 (2018-02-15) example 1 | 8 |
| Y | JP 2019-140114 A (NIPPON ZEON CO) 22 August 2019 (2019-08-22) claims, paragraph [0028] | 9 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 March 2022** | **05 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/003144** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2020-515012 A (LG CHEMICAL LTD) 21 May 2020 (2020-05-21) entire text, all drawings | 1-11 |
| A | JP 2020-515014 A (LG CHEMICAL LTD) 21 May 2020 (2020-05-21) entire text, all drawings | 1-11 |
| A | WO 2014/050708 A1 (NIPPON ZEON CO) 03 April 2014 (2014-04-03) entire text, all drawings | 1-11 |

Form PCT/ISA/210 (second sheet) (January 2015)

**INTERNATIONAL SEARCH REPORT**
Information on patent family members

International application No.

**PCT/JP2022/003144**

| Patent document cited in search report | | | Publication date (day/month/year) | Patent family member(s) | | | Publication date (day/month/year) |
|---|---|---|---|---|---|---|---|
| JP | 2021-007109 | A | 21 January 2021 | US | 2018/0219212 | A1 | |
| | | | | paragraphs [0091], [0134], [0172], example 1 | | | |
| | | | | WO | 2017/099481 | A1 | |
| | | | | EP | 3319151 | A | |
| JP | 2018-055836 | A | 05 April 2018 | US | 2020/0185706 | A1 | |
| | | | | claim 1, paragraph [0018] | | | |
| | | | | WO | 2018/055955 | A1 | |
| | | | | EP | 3518324 | A1 | |
| JP | 2006-108113 | A | 20 April 2006 | US | 2006/0234131 | A1 | |
| | | | | claim 32, paragraph [0155] | | | |
| | | | | EP | 997960 | A2 | |
| JP | 2018-509493 | A | 05 April 2018 | US | 2018/0019457 | A1 | |
| | | | | paragraphs [0007], [0096], example 34, tables 1, 3, fig. 4 | | | |
| | | | | WO | 2016/123404 | A1 | |
| JP | 2018-026266 | A | 15 February 2018 | CN | 108305970 | A | |
| JP | 2019-140114 | A | 22 August 2019 | US | 2016/0013465 | A1 | |
| | | | | claims, paragraph [0041] | | | |
| | | | | WO | 2014/148577 | A1 | |
| | | | | EP | 2978045 | A | |
| JP | 2020-515012 | A | 21 May 2020 | US | 2020/0044238 | A1 | |
| | | | | entire text, all drawings | | | |
| | | | | WO | 2018/174538 | A1 | |
| | | | | EP | 3506398 | A1 | |
| JP | 2020-515014 | A | 21 May 2020 | US | 2020/0028174 | A1 | |
| | | | | entire text, all drawings | | | |
| | | | | WO | 2018/174616 | A1 | |
| | | | | EP | 3525270 | A1 | |
| WO | 2014/050708 | A1 | 03 April 2014 | US | 2015/0270523 | A1 | |
| | | | | entire text, all drawings | | | |
| | | | | EP | 2903055 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018180472 A1
- WO 2018084046 A1
- JP 2013179040 A
- JP 2018174150 A
- JP 2013145763 A